(19) **Europäisches Patentamt / European Patent Office / Office européen des brevets**

(11) **EP 3 171 327 A1**

(12) # EUROPEAN PATENT APPLICATION
published in accordance with Art. 153(4) EPC

(43) Date of publication:
**24.05.2017 Bulletin 2017/21**

(21) Application number: **15822857.7**

(22) Date of filing: **10.06.2015**

(51) Int Cl.:
*G06Q 50/02* (2012.01)  *A01G 9/24* (2006.01)
*G01J 3/46* (2006.01)

(86) International application number:
**PCT/JP2015/066773**

(87) International publication number:
**WO 2016/009752 (21.01.2016 Gazette 2016/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **16.07.2014 JP 2014146161**
**15.01.2015 JP 2015005745**

(71) Applicant: **Ricoh Company, Ltd.**
**Tokyo 143-8555 (JP)**

(72) Inventors:
• **NOGUCHI Takashi**
**Tokyo 143-8555 (JP)**

• **MASUDA Kensuke**
**Tokyo 143-8555 (JP)**
• **OSHIKIRI Kohji**
**Tokyo 143-8555 (JP)**
• **DENDA Takeshi**
**Tokyo 143-8555 (JP)**
• **MATSUMURA Shohei**
**Tokyo 143-8555 (JP)**
• **TOMII Yasuhiro**
**Tokyo 143-8555 (JP)**
• **YAMANAKA Yuji**
**Tokyo 143-8555 (JP)**

(74) Representative: **Schwabe - Sandmair - Marx**
**Patentanwälte Rechtsanwalt**
**Partnerschaft mbB**
**Joseph-Wild-Straße 20**
**81829 München (DE)**

(54) **INFORMATION PROCESSING DEVICE, METHOD FOR GENERATING CONTROL SIGNAL, INFORMATION PROCESSING SYSTEM, AND PROGRAM**

(57)    An information processing apparatus includes an obtainment unit configured to obtain spectroscopic information generated from image information of a plant captured by an imaging unit; and a generation unit configured to generate a control signal for controlling a degree of water stress of the plant, based on the obtained spectroscopic information.

FIG.1

**Description**

[Technical Field]

The present disclosure relates to an information processing apparatuses, a method of producing a control signal, an information processing system, and a program.

[Background Art]

Progress of IT (information management technology) development in recent years makes it possible to apply the IT technology to the field of agriculture. For example, in the field of agriculture and horticulture in facilities, it has been known by a term "plant factory", raising productivity of plants has been under investigation, by managing an environment for cultivating plants so that the environment for cultivating the plants is controlled to be in a state suitable for cultivation of the plants.

In such a plant factory, a plant cultivation system that controls the environment for cultivating plants reduces load of cultivation work, and stabilizes supply of plants. Therefore, such systems have drawn attention due to their possibility to improve productivity of plants (see, for example, Patent Document 1 and Patent Document 2).

Patent Document 1 describes determination of similarity between information based on an image of plants obtained by a camera that is placed at a fixed point, and information that represents characteristics of typical plants (standard data). Patent Document 2 describes management of stages of the growth of plants detected in images obtained by a camera.

However, to raise productivity of plants by controlling the environment for cultivating the plants by such as plant cultivation system, it is inevitable to efficiently collect information about the productivity of the plants. However, the technologies as described in Patent Documents 1 and 2 only obtain brightness information by the camera as information directly relating to the plants themselves, and it is hard to say that information about the productivity of the plants are efficiently collected.

[Related-Art Documents]

[Patent Documents]

[Patent Document 1] Japanese Unexamined Utility Model Application Publication No. 5-17505
[Patent Document 2] Japanese Unexamined Patent Publication No. 2013-5725

[Disclosure of the Invention]

In view of the above problem, it is an object of an embodiment in the present disclosure to make the entire system efficient, and to provide an information processing apparatus, a machine, a method of producing a control signal, an information processing system, and a program that contribute to improve productivity of targets such as plants.

[Means to Solve the Problem]

According to an embodiment in the present disclosure, an information processing apparatus includes an obtainment unit configured to obtain first subject state information that represents a state of a subject generated from image information of the subject captured by an imaging unit; and a generation unit configured to generate the control signal based on the obtained first subject state information.

[Effects of the Invention]

According to an embodiment in the present disclosure, it is possible to make the entire system efficient.

[Brief Description of the Drawings]

FIG. 1 is a diagram schematically illustrating a system configuration of a plant cultivation system according to an embodiment in the present disclosure;

FIG. 2 is a diagram schematically illustrating a configuration of an information communication system including a server device that governs overall control according to an embodiment in the present disclosure;

FIG. 3 is a diagram illustrating an operating machine as an example of a machine according to an embodiment in the present disclosure;

FIG. 4 is a diagram illustrating an external appearance of a stereo camera device as a kind of a sensor device according to an embodiment in the present disclosure;

FIG. 5 is a diagram illustrating a configuration of a stereo camera device according to an embodiment in the present disclosure;

FIG. 6 is a functional block diagram of functions of an FPGA installed in a stereo camera device according to an embodiment in the present disclosure;

FIG. 7 is a schematic view illustrating principles of ranging by a stereo camera device according to an embodiment in the present disclosure;

FIG. 8A is a diagram illustrating an image detectable by a stereo camera device according to an embodiment in the present disclosure;

FIG. 8B is a schematic view illustrating a parallax image by a block matching method with respect to a reference image in FIG. 8A according to an embodiment in the present disclosure;

FIG. 8C is a schematic view illustrating a parallax image by an SGM method with respect to a reference image in FIG. 8A according to an embodiment in the present disclosure;

FIG. 9A is a schematic view illustrating a reference pixel in a reference image by a stereo camera device according to an embodiment in the present disclosure;

FIG. 9B is a diagram illustrating a process of detecting a cost (degree of coincidence, dissimilarity, or similarity) in a specified range in a comparative image with respect to an area in a reference image (a predetermined reference pixel) by a stereo camera device according to an embodiment in the present disclosure;

FIG. 10 is a diagram illustrating a relationship between an amount of shift obtained by a stereo camera device and a cost value according to an embodiment in the present disclosure;

FIG. 11 is a diagram schematically illustrating a process of synthesizing a cost by a stereo camera device according to an embodiment in the present disclosure;

FIG. 12 is a diagram illustrating a relationship between an amount of shift by a stereo camera device and a synthesized cost value according to an embodiment in the present disclosure;

FIG. 13 is a diagram illustrating an external appearance of a polarization camera device according to an embodiment in the present disclosure;

FIG. 14 is a diagram illustrating a configuration of a polarization camera device according to an embodiment in the present disclosure;

FIG. 15A is a front view of a filter installed in a polarization camera device according to an embodiment in the present disclosure;

FIG. 15B is a diagram illustrating correspondence between a filter installed in a polarization camera device and pixels according to an embodiment in the present disclosure;

FIG. 16 is a diagram illustrating an external appearance of a multi-spectrum camera device (a colorimetry camera device) according to an embodiment in the present disclosure;

FIG. 17A is a diagram (a front view) illustrating a configuration of a multi-spectrum camera device (a colorimetry camera device) according to an embodiment in the present disclosure;

FIG. 17B is a diagram (a sideway cross-sectional view) illustrating a configuration of a multi-spectrum camera device (a colorimetry camera device) according to an embodiment in the present disclosure;

FIG. 18 is a diagram illustrating a filter and an aperture stop installable on a multi-spectrum camera device according to an embodiment in the present disclosure;

FIG. 19 is a diagram illustrating a captured image by a multi-spectrum camera device according to an embodiment in the present disclosure;

FIG. 20 is an enlarged view of a macro pixel in a captured image by a multi-spectrum camera device according to an embodiment in the present disclosure;

FIG. 21 is a diagram illustrating a relationship between the wavelength measurable by a multi-spectrum camera device and the spectral reflectance according to an embodiment in the present disclosure;

FIG. 22A is an example of a filter and an aperture stop installable on a multi-spectrum camera device according to an embodiment in the present disclosure;

FIG. 22B is another example of a filter and an aperture stop installable on a multi-spectrum camera device according to an embodiment in the present disclosure;

FIG. 23 is a diagram illustrating typical spectral reflectance spectrums with respect to leafs of a plant, in which the wavelength and the spectral reflectance are illustrated for a normal leaf having a high plant activity, a withered leaf having a low plant activity, and a leaf having water stress given;

FIG. 24 is a schematic view illustrating an environmental information obtainment unit 500 according to an embodiment in the present disclosure;

FIG. 25 is a schematic view illustrating an environment adjustment unit 600 according to an embodiment in the present disclosure;

FIG. 26 is a flowchart illustrating a process of predicting harvest time according to an embodiment in the present disclosure;

FIG. 27 is a flowchart illustrating another example of a process of predicting harvest time according to an embodiment in the present disclosure;

FIG. 28 is a flowchart illustrating a process of adjusting harvest time according to an embodiment in the present disclosure;

FIG. 29 is a flowchart illustrating a process of exterminating noxious insects according to an embodiment in the present disclosure;

FIG. 30 is a flowchart illustrating a process of illumination by supplementary light sources according to an embodiment in the present disclosure;

FIG. 31 is a flowchart illustrating a harvesting process according to an embodiment in the present disclosure;

FIG. 32 is an example of a diagram for illustrating PRI;

FIG. 33 is an example of a flowchart of a process of obtaining data representing a relationship between water stress and PRI by a plant cultivation system;

FIG. 34A is an example of a schematic view of a relationship between the degree of water stress and PRI;

FIG. 34B is an example of a schematic view of a relationship between raising months and preferable PRI; and

FIG. 35 is an example of a flowchart illustrating steps for irrigation control executed by a plant cultivation system.

[Description of Reference Numerals]

| 1: | plant cultivation system |
| 10: | plant cultivation facility |
| 100: | operating machine |
| 106: | harvesting device |
| 108: | harvesting shears |
| 110: | gripping arm |
| 112: | harvest box |
| 118: | control device |
| 400: | plant information obtainment unit |
| 410: | stereo camera device |
| 430: | polarization camera device |
| 450: | multi-spectrum camera device |
| 500: | environmental information obtainment unit |
| 600: | environment adjustment unit |
| 704: | server |
| 706, 708: | database |
| 710, 712: | user terminal |
| 1501: | system |
| 1502: | information communication system |
| 5002: | temperature sensor |
| 5004: | humidity sensor |
| 5006: | illuminance sensor |
| 5008: | wind speed sensor |
| 5010: | $CO_2$ concentration sensor |
| 5012: | water sensor |
| 5014: | nutrient sensor |
| 6002: | temperature adjustment unit |
| 6004: | humidity adjustment unit |
| 6006: | illuminance adjustment unit |
| 6008: | wind speed adjustment unit |
| 6010: | CO2 concentration adjustment unit |

6012:       water adjustment unit
6014:       nutrient adjustment unit

[Mode for Carrying out of the Invention]

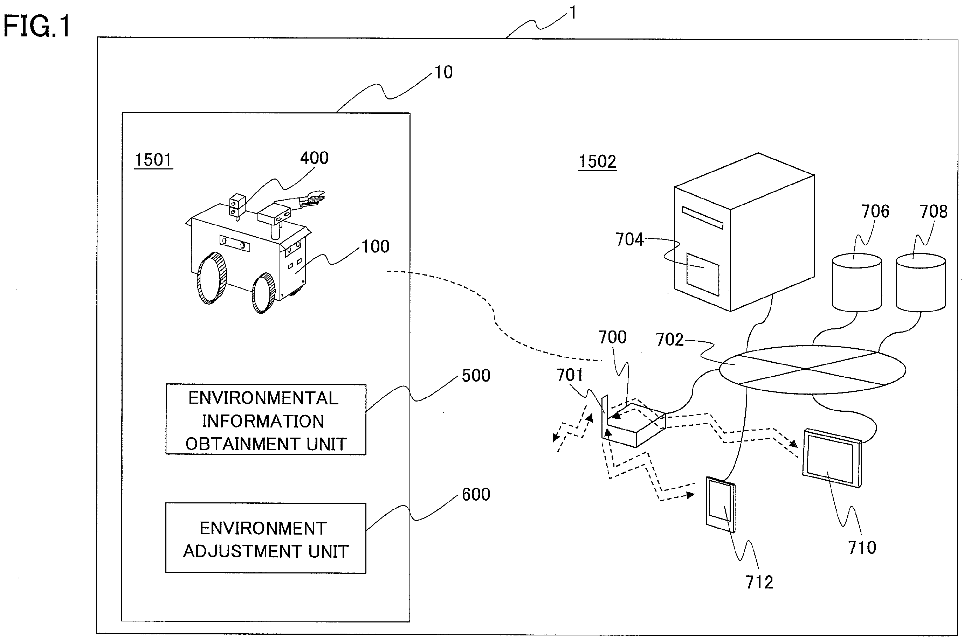

In the following, embodiments in the present disclosure will be described by using FIG. 1 to FIG. 31. The embodiments describe examples of moving objects themselves that work while moving, or work after having moved, including a traveling machine such as an operating machine and a construction machine, a flying machine, a ship, a diving machine, a robot, and the like, and a system that controls such moving objects directly or indirectly for executing desired work. Although the embodiments are applicable to various moving objects as described above, an operating machine is taken here for describing a basic configuration and operations because its movement and contents of work are intuitively understandable.

[Overview of entire system]

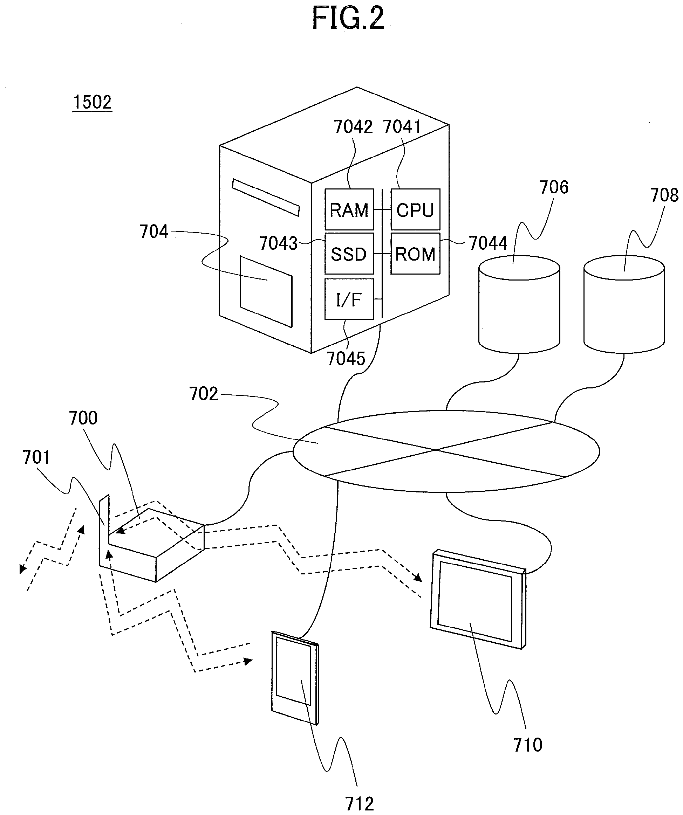

An overview of the entire system will be described according to an embodiment by using FIG. 1 and FIG. 2.

<Configuration of plant cultivation system>

One of problems to be solved in a plant factory is to improve productivity of plants, which is solved by using various camera devices in the embodiment. Note that a plant factory may be a solar-light use type that uses solar light only or a combination of solar light and artificial light such as LEDs, or a full control type that never uses solar light. In the embodiment, a plant factory of a solar-light use type that uses solar light and artificial light together is taken as an example for description. FIG. 1 illustrates a configuration of a plant cultivation system 1 to which the embodiment is applied. The plant cultivation system 1 in FIG. 1 includes an operating machine 100 having a plant information obtainment unit 400, an environmental information obtainment unit 500, and an environment adjustment unit 600, in a plant cultivation facility 10. Configurations and operations of the respective machines and units will be described later in detail. In the plant cultivation facility 10, plants are spread all over six stages of shelves that are vertically arranged, and the plants are put into several groups having respective plant management IDs for management.

A dashed line in the figure designates reception and transmission of information by wireless communication, and the units constitute a wireless communication network. This wireless communication is connected to a wireless access point 700 of an information communication system 1502 illustrated in FIG. 2. In this way, the units operate cooperatively, and hence, are capable of transferring information efficiently. Operations of the plant cultivation system 1 using the wireless communication will be described later in detail.

Note that the plant cultivation system 1 is illustrated in FIG. 1 as an indoor plant factory, but it is not limited as such; the embodiment covers an outdoor facility, for example, a farming field.

The plant cultivation system 1 in the embodiment is constituted with a system 1501 in the plant cultivation facility 10 in this plant factory, and the information communication system 1502, which will be described next. Note that alphabetical characters a, b, c, etc., attached as suffixes of reference numerals (numbers) in the drawings are used for making distinction among devices, machines, parts, and the like having the reference numerals, so that such devices are recognized as having the same basic function, but also respective functions. Such alphabetical characters may be omitted in the description of the embodiments if clarifying the distinction is not necessary. In such a case, the description is applicable to all machines and devices having such alphabetical characters.

Also, elements having hyphens and digits as suffixes of reference numerals basically have the same or analogous functions as an element having the reference numeral without a suffix, but have different configurations. Unless consciously distinguished, such elements will be described in the following without taking the hyphens and digits into account. In this case, the description is applicable to all machines and devices having such hyphens and digits.

Further, in the following description, if reference numerals are concatenated with "," between them, such as "the user terminal 710, 712", this basically means that relevant description is applicable to "a reference numeral and/or another reference numeral", or "at least one of all reference numerals". In the example described above, relevant description is applicable to "the user terminal 710 and/or the user terminal 712", or "at least one of the user terminals 710 and 712".

<Configuration of information communication system>

FIG. 2 illustrates a configuration of the information communication system 1502 to which the embodiment is applied. The information communication system 1502 includes the wireless access point 700, the Internet 702, a server 704, a database 706, a database 708, a user terminal 710, and a user terminal 712.

The wireless access point 700, the server 704, and the databases 706 and 708 are connected with the Internet 702 by wire, but the connection is not limited to that, and wireless connection may be adopted. Also, the user terminals 710 and 712 may be directly connected with the Internet 702 by wire or wirelessly, or may be connected via the wireless access point 700 and/or other repeaters.

The wireless access point 700 is a wireless LAN access point indoors, and includes a directional antenna 701. If information communication is not limited to a specific direction, a non-directional antenna may be used as the directional antenna 701. Also, the wireless access point 700 is a router type that includes a routing function and/or a network address translation (NAT) function. The routing function makes it possible to select an optimum route for transmitting a packet to a destination host in a TCP/IP network. Also, the NAT function makes it possible for a router or a gateway at the boundary of two TCP/IP networks, to automatically convert IP addresses in the respective networks into each other, for transferring data. By these functions, efficient information communication can be executed among the server 704 and the others.

A wireless protocol here is assumed to be compliant with the standard of IEEE802.11 series, but is not limited as such. For example, the wireless protocol may be W-CDMA (UMTS), CDMA2000 1X, Long Term Evolution (LTE), or the like that is used for a mobile communication system.

The server 704 includes a CPU (Central Processing Unit) 7041, a ROM (Read-Only Memory) 7044, a RAM (Random Access Memory) 7042, a solid state drive (SSD) 7043, and an I/F (Interface) 7045. Note that the server 704 may include a hard disk in addition to the SSD, or instead of the SSD. The CPU 7041 is a main unit that executes a program on the server 704. The ROM 7044 records contents to be processed by the CPU 7041 immediately after the power is turned on, and a group of instructions minimally required. The RAM 7042 is a memory to temporarily store data processed by the CPU 7041. This server 704 functions as a control device to control the operating machine 100, the plant information obtainment unit 400, the environmental information obtainment unit 500, and the environment adjustment unit 600.

The server 704 executes information communication with the operating machine 100, the environmental information obtainment unit 500, the environment adjustment unit 600, and the like in the plant factory, illustrated in FIG. 1 via the wireless access point 700. The server 704 executes information communication also with the databases 706 and 708 and the user terminals 710 and 712. Operations executed by this server 704 will be described later. An operation executed by the server 704 is executed by a CPU that reads out a program stored in the SSD to be loaded into the RAM, and executes the program based on data loaded into the RAM. Note that the program stored in the SSD is updatable. Also, the program may be stored in a portable recording medium such as a CD-ROM, a DVD-ROM, an SD card, and a USB memory. In this case, the server 704 reads out the program from such medium, and executes the program. Also, the server 704 is connected with the Internet 702 via the interface.

The wireless access point 700 functions as an obtainment unit of the server 704 to obtain information from the operating machine 100 and the like. Also, the CPU, the ROM, and the RAM function as a generation unit to generate a control signal for controlling the operating machine 100 and the like.

Here, the plant cultivation system 1 in the embodiment has problems to be solved that are to correctly transmit and receive information when exchanging the information by wireless communication, and to ensure security of information to be transmitted and received. Therefore, the server 704 determines whether the operating machine 100, the user terminals 710 and 712, and the like are positioned in specific areas such as the plant factory and a facility relating to information communication, based on positional information obtained from the operating machine 100, the user terminals 710 and 712, and the like. If having determined that these devices are positioned in the specific areas, the server 704 executes authentication processes for the operating machine 100, the user terminals 710 and 712, and the like, and only if the authentication succeeds, applies the plant cultivation system 1 in the embodiment to the devices. In other words, information communicated in the information communication system 1502 is encrypted, and a key for decryption is assigned only when the authentication succeeded, to enable meaningful information communication. On the other hand, if the authentication has failed, information cannot be decrypted, meaningful information communication cannot be executed, and the information communication system 1502 becomes unavailable. In this way, the safety of the information communication system 1502 is raised. Also, even if the operating machine 100 is stolen, the operating machine 100 cannot be used as long as the authentication fails, which is useful for antitheft. Note that the server 704 may execute the authentication process regardless of whether a device going to use the information communication system 1502 is positioned in a specific area. The authentication may be executed by having a user enter the user ID and the password as in the embodiment, or may be executed by using a specific ID for each of the units or a device that constitutes the units. Also, if safety does not need to be taken into consideration, processes are not necessary for authentication, encryption, and decryption.

Also, when the plant cultivation system 1 including the information communication system 1502 is provided for a user, it is desirable to grasp use of the plant cultivation system 1 precisely and easily so that the usage fee of the plant cultivation system 1 can be charged to the user efficiently. Therefore, the server 704 also executes a charge process (billing) as will be described later. In this way, the server 704 executes a lot of processes, and hence, a high-performance, robust computer is used. However, processes executed by the server 704 described so far, or going to be described below, may be distributed and executed by multiple servers (computers). For example, the plant cultivation system 1 may include a server for management, a server for recognition and analysis, and a server for charging management, to distribute corresponding processes.

Further, a system like the plant cultivation system 1 requires cooperative operations of multiple elements. Therefore, a problem to be dealt with is prompt handling of faults of elements in the plant cultivation system 1. To deal with this problem, the server 704 monitors whether a failure such as a fault has occurred in each unit such as the operating machine 100. If having detected a failure, the server 704 automatically indicates the failure to a provider of the plant cultivation system 1, or a service provider using the plant cultivation system 1, and the user terminals 710 and 712. Note that if the operating machine 100 or the like has detected a failure such as a fault, the failure may be indicated to the server 704 without waiting for a query from the server 704. In this way, the plant cultivation system 1 is capable of troubleshooting. Therefore, a service provider or the like can immediately grasp a situation if a defect has occurred in the plant cultivation system 1, and can deal with the defect.

One of the problems to be solved by the plant cultivation system 1 is to correctly recognize a plant for various processes. Thereupon, to execute this recognition process correctly and promptly, the database 706 stores various data items. The server 704 uses the data stored in this database 706, to execute a recognition process as will be described later. The data stored in the database 706 is, for the most part, image data (standard patterns used for the recognition process, and the like), attributes and types of the image data, and information about operations of the operating machine 100 corresponding to the types. The image data is stored in a state associated with data representing the attributes and types. Note that the database 706 may store contents data to provide information via the Internet 702. Also in this case, the image data is associated with data representing the attributes and types. The more the amount of such data the database 706 accumulates, the more precisely the server 704 can execute the recognition process.

In addition to the recognition process described above, it is important to accumulate information about work in the plant factory and states of plants to be worked on so as to execute the charge process described above and future work efficiently. For this purpose, the database 708 mainly functions as a storage to store information transmitted from the operating machine 100, the environmental information obtainment unit 500, and the like in the plant factory. The information includes, for example, start time, interruption time, end time of work, information about a place where work is required, a work position at which a fertilizer has been given along with the date and time, the normalized vegetation index NDVI, which will be described later, and information about noxious insects. By having such information items accumulated into the database, the accumulated data can be analyzed and utilized to make future farming efficient. In other words, the server 704 and the like may analyze the accumulated information, derive specific tendencies of plants in terms of raising states and shipment timings, and based on the tendencies, calculate, for example, how much fertilizers need to be given to obtain the plants having targeted quality at desired timings. Especially, since harvest times can be predicted with values of the normalized vegetation index NDVI, it is desirable to accumulate a lot of information from the plants raised in the plant factory.

Further, since a selling price of produce is determined by a relationship between demand and supply, it is desirable to ship the produce when the demand is high. Thereupon, the database 708 also stores shipment information from the market, and stock information. For example, plants (or their packages) to be shipped may have identifiable information attached, such as wireless tags and bar codes. The type of the produce is obtained from the identification information at timings when the produce is moved or stored before appearing on the market after the shipment, and identified information, information about identified locations, and identified times are successively stored in the database 708. Note that information to be identified is obtained by a system having a wireless tag reader or a bar code reader, and stored in the database 708 via the Internet 702 along with information required for tracking the plants, such as information about the identified time, and information about the identified location. Thus, a user (using the user terminal 710 or 712) and the server 704 in the embodiment can track movement of the plants, and can determine the state of demand for the plants. In other words, since plants liked by consumers are stocked by a smaller amount or moved faster, the server 704 (or the user via the user terminal 710 or 712) can identify such plants by analyzing information stored in the database 708. Further, to have such plants liked by consumers ship earlier, the server 704 controls the environment adjustment unit 600 and the like to control the environment in the facility, namely, to control fertilizing, watering, and supplying carbon dioxide so as to accelerate the growth of plants, and to make the harvest earlier.

Also, being capable of predicting the harvest time and crop yields of plants provides greater value for a system user. To implement such capability, the server 704 can execute multivariate analysis in response to commands from the user terminals 710 and 712, by using conditions (raising conditions) under which the produce has been actually raised, such as the plant activity (the normalized vegetation index NDVI is one of indicators, which will be described later), a degree of water stress, situations of watering and fertilization, hours of sunshine, the air temperature, the humidity, and the like. These conditions are analyzed with the raising stages, the harvest time, and the crop yields of the plants obtained under the conditions. The more these data items are accumulated, the higher the precision becomes in terms of predicted output (harvest time and crop yields). Note that the raising conditions described above are obtained by the server 704 from any one of, or a combination of informational sources including the units such as the operating machine 100 in the plant factory, content information (weather information) about the environment provided via the Internet, and input by the user. Note that the predicted output is transmitted to, for example, the user terminals 710 and 712 to be displayed. Also, this output of predicted information is an informational asset that can be independently sold to other users and customers through telecommunications lines such as the Internet, or by providing recording media on which the predicted information is recorded.

Note that although the databases 706 and 708 have been described as elements separate from the server 704, at least one of the databases 706 and 708 may be installed in the server 704. In this case, the area of the SSD may be partitioned so as to configure the respective databases. Alternatively, at least one of the database 706 and the database 708 may be connected with the server 704 wired or wirelessly without intervention of the Internet 702. Configured as such, communication via the Internet can be omitted, and hence, a process that requires accessing the database can be expedited.

The user terminal 710 is a tablet computer. Also, the user terminal 712 is a mobile computer that is different from a smart phone or the like that requires selection of a place to be used. Note that the user terminals 710 and 712 are not limited to a tablet computer and a mobile computer, but may be desktop computers, embedded computers in other devices, or wearable computers such as wrist watches and eyeglasses.

These user terminals 710 and 712 can obtain indications and information from the units via the server 704. For example, the user terminals 710 and 712 can display an image obtained on the operating machine 100. The server 704 monitors exchange of information between these user terminals 710 and 712 and the units, and records the exchange on the database 706 and the database 708. Note that if the server 704 does not execute monitoring, the user terminals 710 and 712 may execute information communication directly with the units, without intervention of the server 704.

Note that the information communication system 1502 in the embodiment is a so-called "cloud system" that executes exchange of information via the Internet 702, but it is not limited as such; for example, the system may exchange information only through a dedicated communication network constructed in a user facility, or through a combination the dedicated communication network and the Internet. This makes it possible to execute faster information transfer. Also, the operating machine 100 and the other constituting units may have functions of the server 704, and execute processes corresponding to the functions. This further makes it possible to accelerate processing speed of the image data obtained by the operating machine 100.

Note that although the plant cultivation system 1 in the embodiment is constituted with the system 1501 in the plant factory as illustrated in FIG. 1, and the information communication system 1502 as illustrated in FIG. 2, the server 704 and the databases 706 and 708 in the information communication system 1502 described above may be installed in the units such as the operating machine 100 in the system 1501 in the plant factory.

[Description of units]

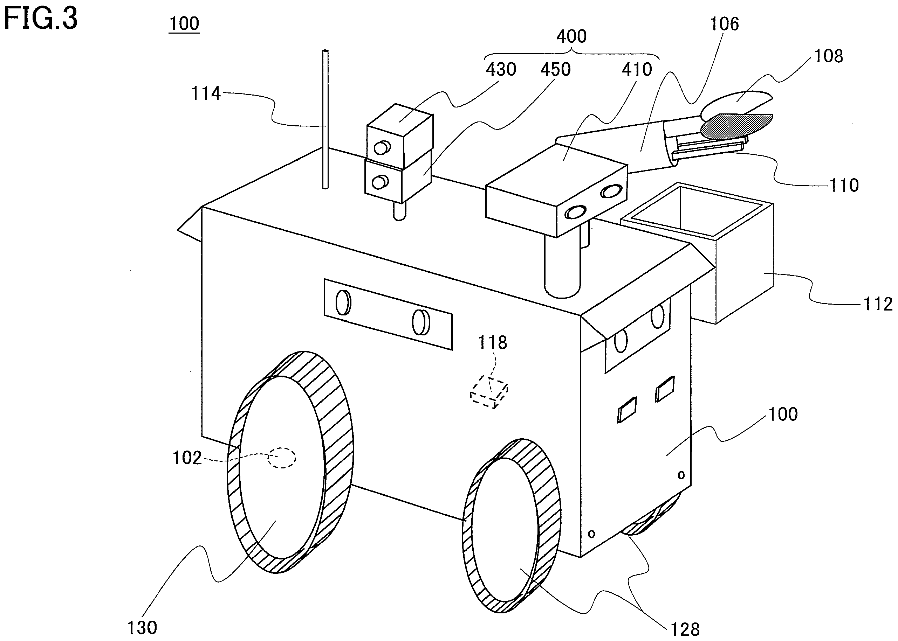

Next, the operating machine, units installed on the operating machine, various sensor devices, and devices installed in the plant factory in the embodiment will be described using FIG. 3 to FIG. 31.

<Operating machine>

To implement efficient work, the operating machine as one of the elements of the plant cultivation system 1 can automatically travel based on a command from the server 704 or autonomously, and can automatically work on plants as working targets. FIG. 3 is a diagram mainly illustrating an external appearance of the operating machine 100. Note that if the other drawings include elements having the same reference numerals, the elements exhibit substantially the same functions, and their description may be omitted.

The operating machine 100 includes a drive unit 102, a harvesting device 106, a stereo camera device 410, a polarization camera device 430, a multi-spectrum camera device 450, an antenna for wireless communication 114, a control device 118, and a set of front wheels 128 and rear wheels 130. The stereo camera device 410, the polarization camera device 430, and the multi-spectrum camera device 450 constitute the plant information obtainment unit 400.

The drive unit 102 is installed in the operating machine 100, and drives the rear wheels 130 to move the operating machine 100.

The harvesting device 106 includes harvesting shears 108, a gripping arm 110, and a harvest box 112, drives the harvesting shears 108 and the gripping arm 110 to move up and down, and to open and to close, and drives the harvest box 112 to move up and down, and left and right, by motors and oil hydraulic cylinders (not illustrated). Then, the harvesting device 106 executes harvesting operations by using distance information obtained by the stereo camera device 410. The harvesting shears 108 cut a target part based on a control command from the control device 118. The gripping arm 110 grips the part to be cut by the harvesting shears 108 based on a control command from the control device 118. The harvest box 112 is a box-shaped member whose bottom part can be opened and closed, temporarily contains objects cut off by the harvesting shears 108, and places the objects on a belt conveyor (not illustrated) by opening the bottom part when a predetermined amount of contained objects has been accumulated.

The stereo camera device 410 is an imaging sensor device that includes two sets of optical systems and imaging elements, to obtain a stereo image mainly for ranging. This stereo camera device 410 is used for detecting the distance to an object to be measured and the size of the object, and plays a major role for work of the operating machine 100, especially, harvesting operations. This stereo camera device 410 is installed in the neighborhood of the head of the operating machine 100, and rotatable around a vertical axis. The stereo camera device 410 is rotated manually or by control from the control device 118. By installing in the neighborhood of the head, an image in front can be easily obtained, and ranging precision can be raised. Note that the position to be installed is not limited to the neighborhood of the head; for example, the stereo camera device 410 may be installed at a position from which space around the operating machine 100 can be easily viewed, such as an upper part of the operating machine 100 where the antenna for wireless communication 114 is installed. Also, to make the stereo camera device 410 capable of moving up and down, the vertical axis may be configured to be movable. This make it possible to capture images of plants spread all over the uppermost stage. Also, to efficiently grasp plants on the left and right of the operating machine 100, multiple stereo camera devices 410 may be installed on both sides of the operating machine 100. Also, the rotation is not limited to uniaxial rotation as in the embodiment; multi-axial rotation may be adopted to obtain images at desired positions and angles. Also in this case, the stereo camera device 410 may be rotated manually or by control by the control device 118. A configuration of this stereo camera device 410 will be described later in detail. The polarization camera device 430 is an imaging sensor device to obtain polarization information from an object, and can obtain a state of an outbreak of noxious insects, and the like. In other words, even noxious insects having light color, such as two-spotted spider mites, which are difficult to recognize in a usual brightness image, can be recognized by a high contrast image using polarization information. This polarization camera device 430 is disposed to be rotatable around a vertical axis. Also, the rotation is not limited to uniaxial rotation as in the embodiment; multi-axial rotation may be adopted to obtain images at desired positions and angles. Such rotational motion may be done manually or by control by the control device 118.

The multi-spectrum camera device 450 is an imaging sensor device to obtain spectroscopic information from an object, and can obtain a growth situation of crops and the like. This multi-spectrum camera device 450 is disposed to be rotatable around a vertical axis. The multi-spectrum camera device 450 includes multiple LEDs, as will be described later, to emit light having a desired wavelength from the LEDs, and to grasp the reflectance on a captured image. Therefore, it is possible to observe a precise growth situation of crops. Also, the rotation is not limited to uniaxial rotation as in the embodiment; multi-axial rotation may be adopted to obtain images at desired positions and angles. Such rotational motion may be done manually or by control by the control device 118. The antenna for wireless communication 114 is an antenna to transmit and receive information by wireless communication with the operating machines 100, the other units, the wireless access point 700, and the like, and attached to an upper part of the operating machine 100 so as to easily receive a wireless signal. This antenna for wireless communication 114 can relay wireless communication.

The control device 118 exchanges information with the drive unit 102, the harvesting device 106, the stereo camera device 410, the polarization camera device 430, the multi-spectrum camera device 450, the antenna for wireless communication 114, and the like, and controls the operating machine 100. This control device 118 is installed in the operating machine 100. The control device 118 can communicate with the server 704 and the user terminals 710 and 712 via the antenna for wireless communication 114. Note that the control device 118 is constituted with a CPU, a RAM, a ROM, a memory, and the like, and the CPU executes a control process based on a program stored in the memory.

The front wheels 128 are provided to move and turn the operating machine 100 around. The rear wheels 130 are parts to which motive power is transferred by the drive unit 102, and when rotated, the operating machine 100 moves.

Note that the operating machine 100 in the embodiment includes the stereo camera device 410, the polarization camera device 430, and the multi-spectrum camera device 450 as sensor devices to obtain information from the outside of the operating machine 100, but does not need to include all of these; the sensor devices to be used may be installed depending on information necessary to obtain. Also, naturally, the operating machine 100 may include sensor devices other than the above sensors, for example, an infrared sensor, a temperature sensor, and a humidity sensor. Information obtained by these sensors is transmitted to the server 704. The server 704 stores the information in the database 708, and utilizes the information for predicting harvest time and the like.

<Stereo camera device>

A. Configuration of stereo camera device

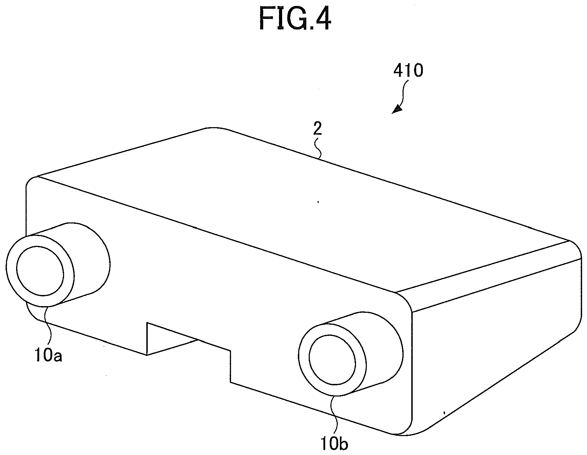

FIG. 4 illustrates an external appearance of the stereo camera device 410. The stereo camera device 410 captures an image of an area, generates image data transmissible to the control device 118 of the operating machine 100, the server 704, and the user terminals 710 and 712, and in addition, obtains distance information (or parallax information) from the stereo camera device 410 for each point in the captured image. Of course, the distance information (or the parallax information) is transmissible to the control device 118 and the like. This stereo camera device 410 can execute ranging that applies an SGM (Semi-Global Matching) method. The stereo camera device 410 includes a main body part 2, and a pair of imaging devices 10a and 10b having a cylindrical shape, disposed on the main body part 2. Note that this stereo camera device 410 is attached to the operating machine 100 to be rotatable by a pillar having a rotational shaft. This rotational motion is done manually or by control from the control device 118.

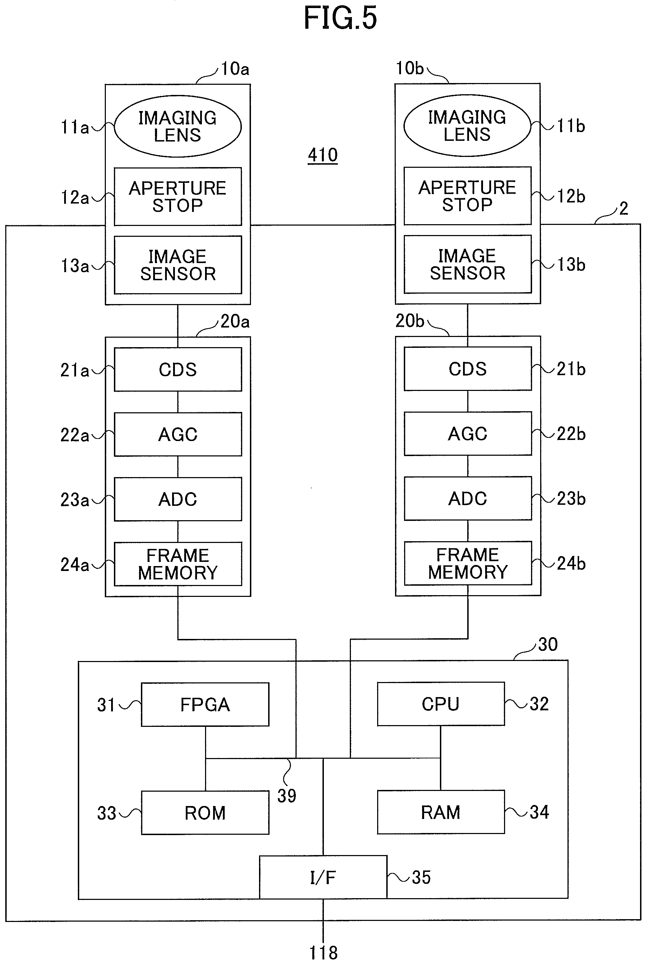

FIG. 5 illustrates a hardware configuration of the entire stereo camera device 410. As illustrated in FIG. 5, the stereo camera device 410 includes the imaging device 10a, the imaging device 10b, a signal conversion device 20a, a signal conversion device 20b, and an image processing device 30.

Among these, the imaging device 10a is a device to capture an image of a scene in front, and to generate an analog signal that represents the image, and includes an imaging lens 11a, an aperture stop 12a, and an image sensor 13a. The imaging lens 11a is an optical element to refract light passing through the imaging lens 11a, for forming an image of an object. The aperture stop 12a intercepts a part of light passing through the imaging lens 11a, to adjust the amount of light input into the image sensor 13a, which will be described later. The image sensor 13a is a semiconductor element to convert light input from the imaging lens 11a and the aperture stop 12a to an electrical, analog image signal, and implemented by a CCD (Charge Coupled Device) or a CMOS (Complementary Metal Oxide Semiconductor). Note that since the imaging device 10b has the same configuration as the imaging device 10a, description about the imaging device 10b is omitted. Also, the imaging lens 11a and the imaging lens 11b are disposed so that respective lens optical axes are parallel to each other.

Note that since the aperture stop 12b and the image sensor 13b have the same configurations as the aperture stop 12a and the image sensor 13a, respectively, description about the aperture stop 12b and the image sensor 13b is omitted.

Also, the signal conversion device 20a converts an analog signal representing a captured image into image data in a digital format, and includes a CDS (Correlated Double Sampling) 21a, an AGC (Automatic Gain Control) 22a, an ADC (Analog-Digital Converter) 23a, and a frame memory 24a. The CDS 21a removes noise from an analog image signal converted by the image sensor 13a, by correlated double sampling. The AGC 22a executes gain control that controls the strength of the analog image signal having noise removed by the CDS 21a. The ADC 23a converts the analog image signal having the gain control applied by the AGC 22a into image data in a digital format. The frame memory 24a stores the image data (a reference image) converted by the ADC 23a.

Similarly, the signal conversion device 20b converts an analog signal representing a captured image into image data in a digital format, and includes a CDS (Correlated Double Sampling) 21b, an AGC (Automatic Gain Control) 22b, an ADC (Analog Digital Converter) 23b, and a frame memory 24b. Note that the CDS 21b, the AGC 22b, the ADC 23b, and the frame memory 24b have the same configurations as the CDS 21a, the AGC 22a, the ADC 23a, and the frame memory 24a, respectively, description about those is omitted. However, the frame memory 24b stores a comparative image.

Further, the image processing device 30 is a device to process image data converted by the signal conversion device 20a and the signal conversion device 20b. This image processing device 30 includes an FPGA (Field Programmable Gate Array) 31, a CPU 32, a ROM 33, a RAM 34, an I/F 35, and a bus line 39 including an address bus and a data bus to have the elements described above (the FPGA 31 to the I/F 35) electrically connected as illustrated in FIG. 5.

Among these, the FPGA 31 is an integrated circuit that is configurable after production by a buyer or a designer, and here, executes a process for calculating a parallax value $\Delta$ in an image represented by image data. The CPU 32 controls functions of the stereo camera device 410. The ROM 33 stores a program for image processing executed by the CPU 32 to control functions of a parallax value derivation device. The RAM 34 is used as a work area of the CPU 32. The I/F 35 is an interface to connect to the control device 118 of the operating machine 100.

Note that the program for image processing described above may be recorded on a computer-readable recording medium, as a file in an installable format or an executable format, to be circulated. The recording medium may be a CD-ROM, an SD card, or the like.

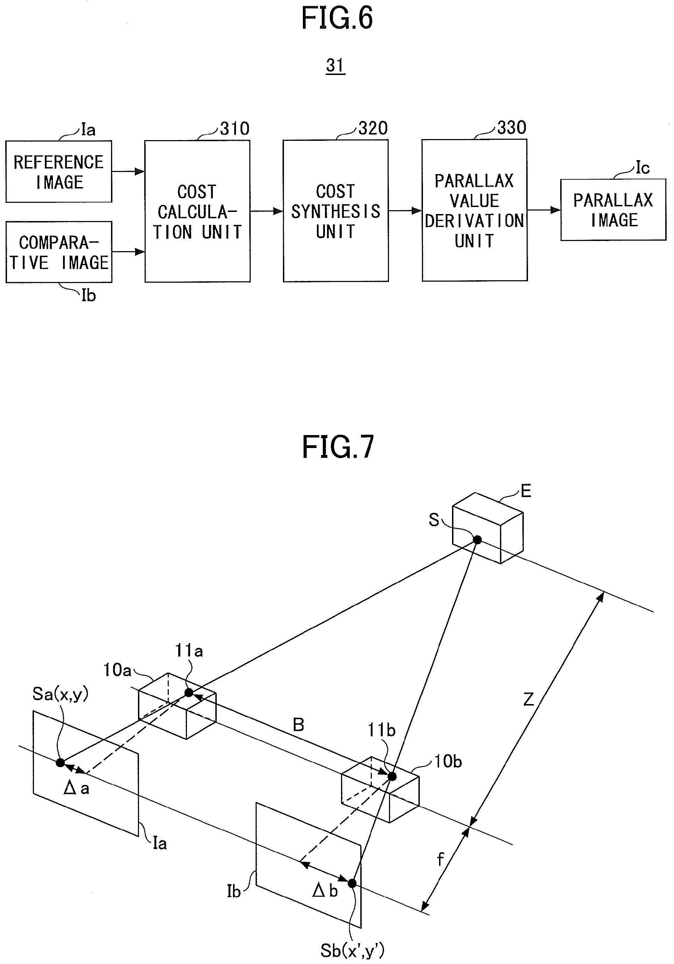

Next, FIG. 6 illustrates a hardware configuration of the main part of the stereo camera device 410. As illustrated in FIG. 6, the FPGA 31 includes a cost (degree of coincidence, dissimilarity, or similarity) calculation unit 310, a cost synthesis unit 320, and a parallax value deriving unit 330. These are implemented as parts of the circuit of the FPGA, but may be configured as corresponding processes executed when the program for image processing stored in the ROM 33 is executed.

Among these, the cost calculation unit 310 calculates, based on a brightness value of a reference pixel in a reference image Ia, and brightness values of multiple candidates of the corresponding pixel on an epipolar line in a comparative image Ib with respect to the reference pixel, cost values C for the candidates of the corresponding pixel with respect to the reference pixel. The cost synthesis unit 320 synthesizes cost values for the candidates of the corresponding pixel with respect to the reference pixel by the cost calculation unit 310, and cost values for candidates of the corresponding pixel with respect to another reference pixel by the cost calculation unit 310, and outputs a synthesized cost value Ls. Note that this synthesis process is a process in which a path cost value Lr is calculated from a cost value C based on Formula 3 described later, and then, a path cost value Lr in each radiation ray is further added based on Formula 4 described later, and eventually a synthesized cost value Ls is calculated.

The parallax value deriving unit 330 derives a parallax value $\Delta$ based on the position of a reference pixel in the reference image and the position of the corresponding pixel having a minimum synthesized cost value Ls in the comparative image after synthesized by the cost synthesis unit 320, and outputs a parallax image Ic that represents parallax values at respective pixels. By using the parallax value $\Delta$ obtained here, the focal length f of the imaging lens 11a and the imaging lens 11b, the baseline length B being the length between the imaging lens 11a and the imaging lens 11b, a distance Z can be calculated by using Formula 2, which will be described later. The process of calculating this distance Z may be executed by the parallax value deriving unit 330, or may be executed by the CPU 32 or the server 704. In this way, the stereo camera device 410 can use the parallax with respect to captured images, to obtain distance information (or parallax information) to each point in the captured images. Note that image processing and image recognition that do not need to calculate parallax values may use just one of the reference image and the comparative image (namely, an image obtained from one of the image sensors 13a and 13b as an image that could be similarly captured by a usual monocular camera).

B. Description of ranging method using SGM method

Next, a method of ranging by the stereo camera device 410, especially, a method of calculating a parallax value by using the SGM method will be described. First, a ranging method using the SGM method will be summarized using FIG. 7 to FIG. 12.

By using FIG. 7, principles will be described for measuring the distance from a stereo camera to an object based on a parallax value that represents a parallax with respect to the object viewed from the stereo camera where the parallax is obtained by stereo imaging. Also, to simplify description in the following, it will be described by units of pixels, not by a predetermined area constituted with multiple pixels.

First, as illustrated in FIG. 7, images captured by the imaging device 10a and the imaging device 10b will be referred to as a reference image Ia and a comparative image Ib, respectively. It is assumed that the imaging device 10a and the imaging device 10b are installed parallel and at the same height in FIG. 7. In FIG. 7, a point S on an object E in the three dimensional space is mapped to positions on the same horizontal line in the imaging device 10a and the imaging device 10b. In other words, each point S is captured on a point Sa(x,y) in the reference image Ia, and on a point Sb(x',y) in the comparative image Ib. In this case, the parallax value $\Delta$ is represented by Formula 1 using x in Sa(x,y) in the coordinates system on the imaging device 10a, and x' in Sb(x',y) in the coordinates system on the imaging device 10b.

$$\Delta = x' - x \qquad \text{(Formula 1)}$$

Here, in the case of FIG. 7, representing the distance between a point Sa(x,y) in the reference image Ia and a cross point of a perpendicular on the imaging surface drawn down from the imaging lens 11a, by $\Delta a$, and representing the distance between a point Sb(x',y) in the reference image Ib and a cross point of a perpendicular on the imaging surface drawn down from the imaging lens 11b, by $\Delta b$, the parallax value is represented by $\Delta = \Delta a + \Delta b$.

Also, by using the parallax value $\Delta$, the distance Z between the imaging device 10a or 10b and the object E can be derived. Specifically, the distance Z is a distance from a surface that includes the focal position of the imaging lens 11a and the focal position of the imaging lens 11b, to a specific point S on the object E. As illustrated in FIG. 7, the distance Z can be calculated by Formula 2 using the focal length f of the imaging lens 11a and the imaging lens 11b; the baseline length B being the length between the imaging lens 11a and the imaging lens 11b; and the parallax value $\Delta$.

$$Z = (B \times f) / \Delta \qquad \text{(Formula 2)}$$

This Formula 2 implies that the greater the parallax value $\Delta$ becomes, the smaller the distance Z is, and the smaller the parallax value $\Delta$ becomes, the greater the distance Z is.

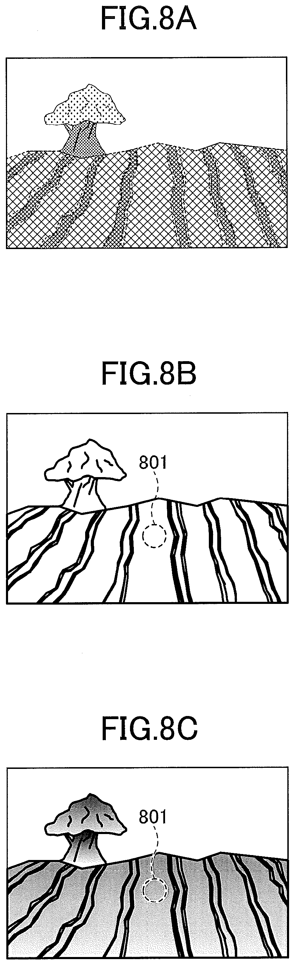

Next, a ranging method using the SGM method will be described by using FIG. 8 to FIG. 12. Note that FIG. 8A is a schematic view illustrating a reference image; FIG. 8B is a schematic view illustrating a parallax image by a block matching method with respect to the reference image in FIG. 8A, for comparison; and FIG. 8C is a schematic view illustrating a parallax image by the SGM method with respect to the reference image in FIG. 8A. Here, the reference image is an image in which an object is represented by the brightness. A parallax image by a block matching method is an image derived by using the block matching method, in which only parallax values of parts having strong textures such as edge parts in the reference image are presented. A parallax image by application of the SGM method is an image derived from the reference image by an applied technology of the SGM method, in which parallax values at coordinates in the reference image are presented. In FIG. 8C, light and shade of color represent different parallax values. In this example, a thicker color represents a smaller parallax value. In other words, a thicker color represents a longer distance.

The SGM method is a method that can derive the parallax value appropriately even for an object having a weak texture, and used for deriving the parallax image illustrated in FIG. 8C based on the reference image illustrated in FIG. 8A. Note that the block matching method derives an edged parallax image as illustrated in FIG. 8B based on the reference image illustrated in FIG. 8A. As can be seen by comparing respective dashed-line circles 801 in FIG. 8B and FIG. 8C with each other, the parallax image by the SGM method can represent detailed information of areas having weaker textures, compared to the parallax image by the block matching method, and hence, the SGM method makes detailed ranging possible.

This SGM method calculates a cost value representing dissimilarity, but does not derives the parallax value immediately after having calculated the cost value; rather, after having calculated the cost value, further calculates a synthesized cost value representing synthetic dissimilarity, and then, derives the parallax value to eventually derive a parallax image (here, a parallax image by the SGM method) that represents parallax values at all pixels. Note that the block matching method is the same as the SGM method in terms of calculating the cost value, but does not calculate the synthesized cost value as done by the SGM method, and only calculates parallax values of parts having strong textures such as edge parts.

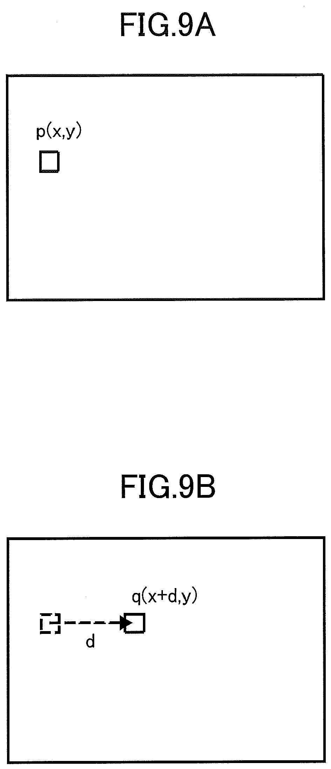

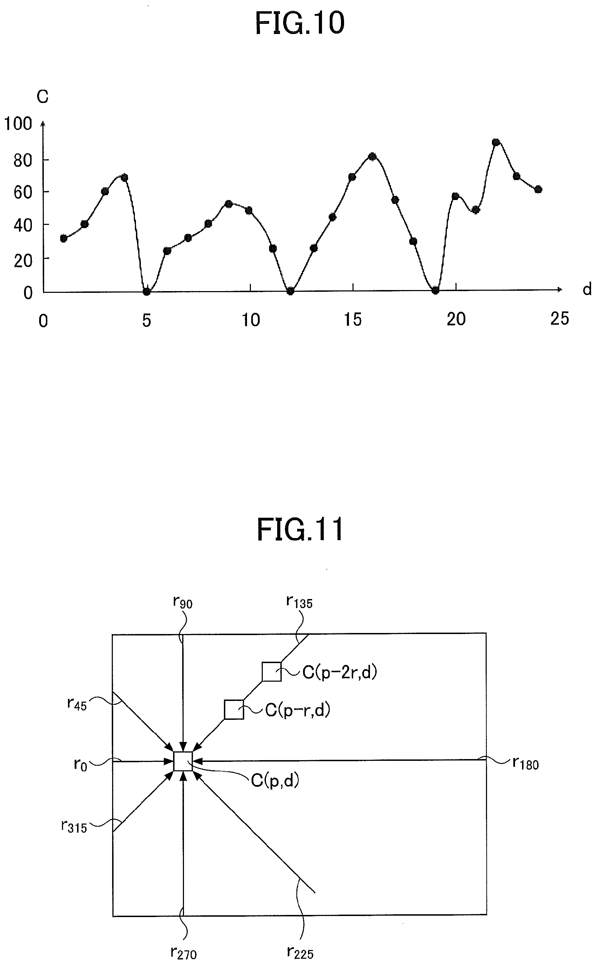

Next, by using FIG. 9 and FIG. 10, a method of calculating a cost value C(p,d) will be described. Note that a cost value C(x,y,d) is denoted as C(p,d) below. FIG. 9A is a schematic view illustrating a reference pixel in a reference image;

FIG. 9B is a schematic view illustrating a process of calculating an amount of shift while sequentially shifting a candidate of the pixel in the comparative image that corresponds to the reference pixel in FIG. 9A. FIG. 10 is a graph that represents cost values of respective shift amounts.

As illustrated in FIG. 9A, based on a predetermined reference pixel p(x,y) in the reference image, and the brightness value of each of multiple candidates q(x+d,y) of the corresponding pixel on the epipolar line in the comparative image with respect to the reference pixel p(x,y), the cost value C(p,d) of each candidate q(x+d,y) of the corresponding pixel with respect to the reference pixel p(x,y) is calculated. Here, d represents the shift amount (amount of shift) between the reference pixel p and the candidate q of the corresponding pixel, represented in units of pixels in the embodiment. In other words, in FIG. 9, a candidate q(x+d,y) of the corresponding pixel is shifted pixel by pixel in a range specified in advance (for example, 0<d<25), to calculate the cost value C(p,d) that represents similarity of the brightness values between the candidate q(x+d,y) of the corresponding pixel and the reference pixel p(x,y). The cost value C(p,d) calculated in this way can be represented by a graph of the shift amount d as illustrated in FIG. 10. In FIG. 10, the cost value C is 0 (zero) for the shift amount d=5, 12, and 19. Therefore, the minimum value cannot be obtained. As such, it is difficult to obtain a minimum value for an object having a weak texture. In other words, there are cases where the block matching method cannot execute correct ranging if the texture is weak.

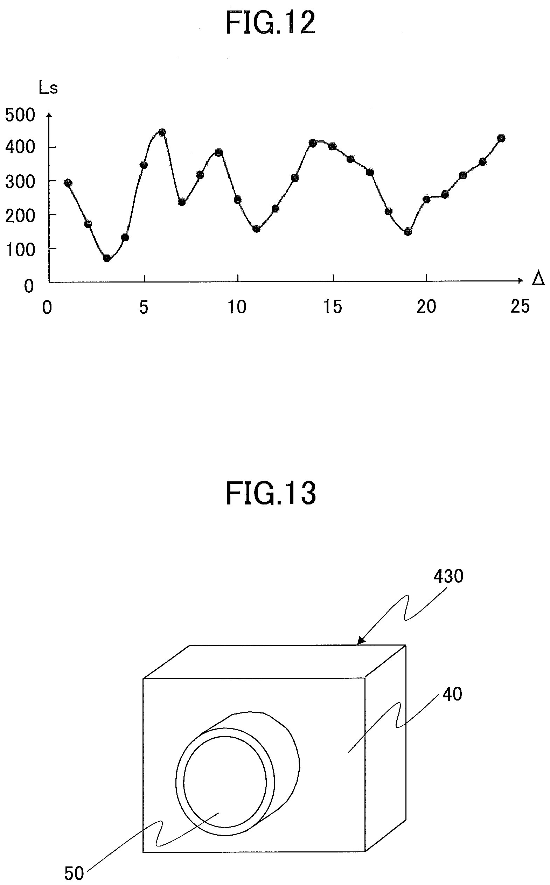

Next, a method of calculating the synthesized cost value Ls(p,d) will be described by using FIG. 11 and FIG. 12. FIG. 11 is a diagram schematically illustrating a process of deriving the synthesized cost value. FIG. 12 is a graph that represents the synthesized cost value for each parallax value. Calculation of the synthesized cost value in the embodiment is not just calculating the cost value C(p,d), but a method of calculating the synthesized cost value Ls(p,d) in which the cost value C(p,d), and cost values of surrounding pixels of a predetermined reference pixel p(x,y), which are assumed as reference pixels, are calculated and aggregated into the cost value C(p,d) of the reference pixel p(x,y).

Here, a method of calculating the synthesis cost value will be described in detail. To calculate the synthesis cost value Ls(p,d), first, path cost values Lr(p,d) need to be calculated. Formula 3 is a formula to calculate a path cost value Lr(p,d), and Formula 4 is a formula to calculate a synthesized cost value Ls.

$$Lr(p,d) = C(p,d) + min\{(Lr(p-r,d), Lr(p-r, d-1)+P1,$$
$$Lr(p-r, d+1)+P1, Lrmin (p-r)+p2\} \quad (Formula\ 3)$$

where r represents a direction of aggregation, and min{} is a function to obtain a minimum value. Lr is calculated recursively as represented in Formula 3. Also, P1 and P2 are fixed parameters defined in advance by an experiment, so as to make a pixel having a greater distance from the reference pixel p(x,y) have less influence on the path cost value Lr. For example, P1=48, and P2=96.

Also, as represented in Formula 3, Lr(p,d) is obtained by adding a minimum value of path cost values Lr of pixels in an r direction illustrated in FIG. 11, to the cost value C at the reference pixel p(x,y). To obtain Lr of the pixels in the r direction in this way, respective Lr are obtained starting from a pixel at a far end in the r direction with respect to the reference image p(x,y), and moving along in the r direction.

Then, as illustrated in FIG. 11, Lr in eight directions are obtained, which are Lr0, Lr45, Lr90, Lr135, Lr180, Lr225, Lr270, and Lr315, and eventually, the synthesis cost value Ls is obtained based on Formula 4.

$$Ls(p,d)=\Sigma Lr \quad (Formula\ 4)$$

The synthesized cost value Ls(p,d) calculated in this way can be represented by a graph for each shift amount d as illustrated in FIG. 12. In FIG. 12, since the synthesis cost value Ls takes the minimum value for the shift amount d=3, the parallax value Δ is calculated as Δ=3.

Note that since the SGM method takes a longer processing time compared to the block matching method, if the processing speed needs to be prioritized over ranging precision, the ranging may be executed by the block matching method. In this case, the process by the cost synthesis unit 320 in FIG. 6 is not executed, and the parallax value deriving unit 330 derives the parallax value from the cost value calculated by the cost calculation unit.

Note that once an object captured by the stereo camera device 410 has been recognized, and the distance has been obtained, the size and the length of the object can be obtained. Specifically, the ROM 33 of the stereo camera device 410 stores a table about the relationship between the distance, and the size and the length per pixel. Therefore, the CPU 32 can identify the size and the length of the object. Note that instead of the table, the ROM 33 may store a relational expression between the distance, and the size and the length per pixel. Further, the size and the length of the object may not be calculated as a process in the stereo camera device 410, but the server 704 or the control device 118 of the operating machine 100 may have data required for calculating the size and the length such as a table as described above, to calculate the size and the length of the object.

<Polarization camera device>

FIG. 13 illustrates a configuration of the polarization camera device 430. This polarization camera device 430 is a camera device that can obtain a brightness image, and a polarization ratio image corresponding to the brightness image. Since the obtained polarization ratio image has a high contrast, this polarization camera device 430 can recognize an object that may not be recognized by brightness or spectroscopic information. The polarization camera device 430 includes a main body part 40 and a lens barrel 50. This polarization camera device 430 is installed rotatable on the operating machine 100. This rotational motion is done manually or by control from the control device 118. By such operations, polarized light of objects in various directions around the operating machine 100 can be imaged, to recognize noxious insects and the like.

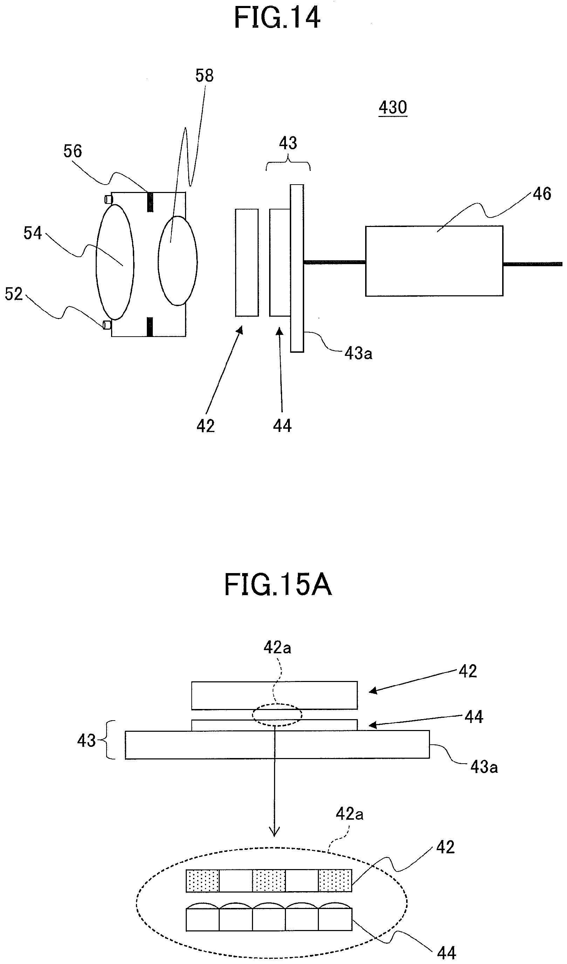

FIG. 14 is a diagram illustrating a configuration of this polarization camera device 430. FIG. 14 is a sideway cross-sectional view. The main body part 40 includes a polarization filter 42, a substrate 43a and a photodetector array 44 that constitutes a sensor substrate 43, and an FPGA 46. The lens barrel 50 includes LEDs 52, a main lens 54, an aperture stop 56, and a condenser lens 58.

The polarization filter 42 is an optical filter that has S-polarized light transmission areas that transmit S polarization, and P-polarized light transmission areas that transmit P polarization, alternately arrayed in the two-dimensional direction. The photodetector array 44 is a monochrome sensor that includes multiple photodetectors, and does not have color filters mounted for each photodetector (may be referred to as a "pixel", below). Also, the photodetector array 44 is a sensor to convert optical information into electric information. The FPGA 46 is an image generating unit to generate a brightness image and a polarization ratio image based on the electric information about S polarization and P polarization output from the photodetector array 44.

Output from this polarization camera device 430 is a brightness image and a polarization ratio image generated by the FPGA 46. These information items are transferred to the control device 118 of the operating machine 100, the server 704, the user terminals 710 and 712, and the like.

The LEDs 52 are multiple light sources placed around the tip of the lens barrel 50 at equal intervals in an embedded state. By having the LEDs as light sources, the imaging receives less influence from the environment, and polarization information can be obtained stably. The main lens 54 is a lens to introduce reflected light from an object Op to the aperture stop 56. The aperture stop 56 is a shield used for adjusting the amount of passing light. The condenser lens 58 is a lens to introduce light passed through the aperture stop 56 to the polarization filter 42.

Reflected light from the object Op receiving light from the LEDs 52 and other light sources is incident on the main lens 54. The light flux incident on this main lens 54 is separated into S polarization and P polarization components to be obtained.

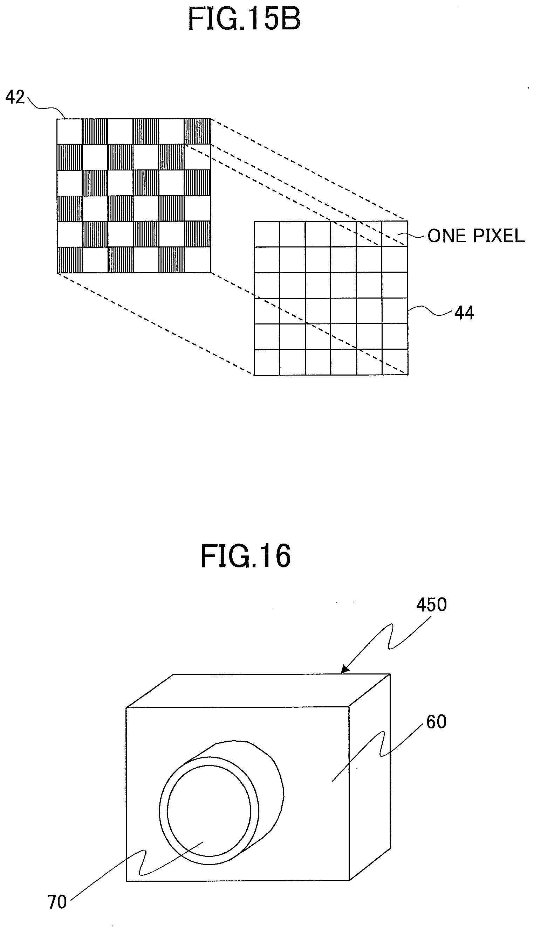

FIG. 15A is a front view of the polarization filter 42 used in the embodiment. Note that a dotted line 42a in FIG. 15A designates a part of the polarization filter 42 and the photodetector array 44, and an enlarged view of the dotted line 42a is illustrated in the lower part of FIG. 15A. FIG. 15B is a diagram illustrating correspondence between the polarization filter 42 and pixels. The polarization filter 42 has S-polarized light transmission areas that transmit S polarization, and P-polarized light transmission areas that transmit P polarization, alternately arrayed in the two-dimensional directions. Therefore, an S polarization image and a P polarization image to be obtained are images lacking every other pixel. The FPGA 46 first executes a process for interpolating missing pixels by using the values of adjacent pixels. Thus, an interpolated S polarization image and an interpolated P polarization image are obtained. Next, based on these S polarization image and P polarization image, a brightness image and a polarization ratio image are generated. A polarization ratio that constitutes each pixel in the polarization ratio image here, just needs to be usable for detecting a characteristic difference between obtained polarization components having respective phase differences. Therefore, the polarization ratio may be the difference between the P polarization component and the S polarization component, as expressed in the following Formula 6; the ratio of the ratio of the P polarization component to the S polarization component, to (P polarization component + S polarization component), as expressed in Formula 7; the ratio of (P polarization component - S polarization component) to (P polarization component + S polarization component), as expressed in Formula 8; or the like. Although Formula 6 here represents a "difference", the polarization "ratio" in the present disclosure is a generic term of calculation results obtained by using polarization information having such phase differences.

```
Polarization ratio = P polarization component / S
polarization component ...(Formula 5)
```

```
Polarization ratio = P polarization component - S
polarization component ...(Formula 6)
```

```
Polarization ratio = (P polarization component / S
polarization component) / (P polarization component +
S polarization component) ...(Formula 7)
```

```
Polarization ratio =(P polarization component - S
polarization component) / (P polarization component +
S polarization component) ...(Formula 8)
```

Note that although the denominator in Formula 7 and Formula 8 is provided for normalization, the normalization is limited as such; may be done with a difference with (P polarization component +S polarization component). Also, in these example formulas, although P polarization information and S polarization information are used as polarization ratio information having different phases, these information items just need to have different phases, and hence, circularly polarized light components may be used. Also, the brightness that constitutes each pixel in a brightness image is represented by

```
brightness = (P polarization component + S
polarization component).
```

<Multi-spectrum camera device>

FIG. 16 illustrates an external appearance of the multi-spectrum camera device 450. This multi-spectrum camera device 450 is a camera device that can capture an image, and obtain the spectral reflectance in the captured image. This multi-spectrum camera device 450 is suitable for contactless and non-destructively detecting a state of plants simultaneously in a range (an area, or a surface), not at a single point. The multi-spectrum camera device 450 includes a main body part 60 and a lens barrel 70. The multi-spectrum camera device 450 is installed rotatable on the operating machine 100. This rotational motion is done manually or by control from the control device 118. By such operations, reflected light of objects in various directions around the operating machine 100 can be imaged, to grasp raising states of plants, such as the plant activity, the length of between branches, and the size of a leaf.

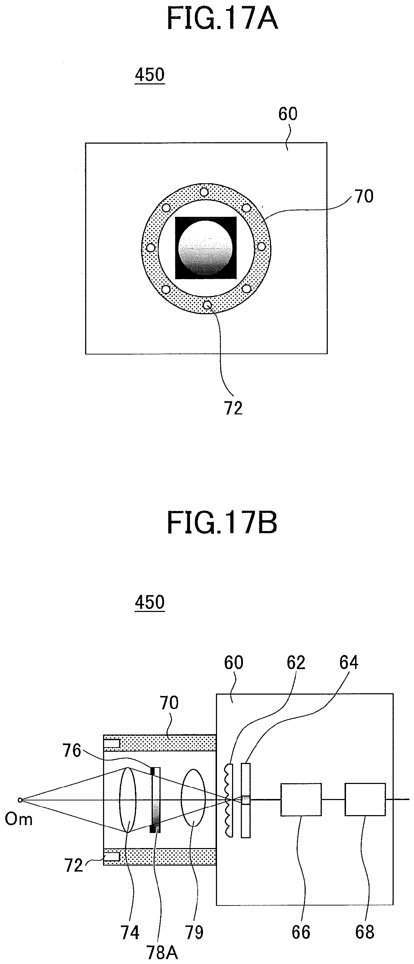

FIGs. 17A-17B are diagrams illustrating of a configuration of this multi-spectrum camera device 450. FIG. 17A is a front view, and FIG. 17B is a sideway cross-sectional view. The main body part 60 includes a microlens array 62, a photodetector array 64, an FPGA 66, and a spectral reflectance calculation unit 68. The lens barrel 70 includes light-emitting diodes (LED) 72, a main lens 74, an aperture stop 76, a filter 78A, and a condenser lens 79.

The microlens array 62 is an optical filter that has multiple small lenses arrayed in the two-dimensional directions. The photodetector array 64 is a monochrome sensor that includes multiple photodetectors, and does not have color filters mounted for each photodetector (may be referred to as a "pixel", below). Also, the photodetector array 64 is a sensor to convert optical information into electric information. The FPGA 66 is a spectral image generating unit to generate multiple types of spectral images, based on electric information being spectroscopic information output from the photodetector array 64.

The spectral reflectance calculation unit 68 is constituted with semiconductor elements such as a CPU, a ROM, and a RAM, and calculates the spectral reflectance for each pixel in a spectral image generated by the FPGA 66.

Output from this multi-spectrum camera device 450 is multiple types of spectral images generated by the FPGA 66, and the spectral reflectance of each pixel of each of the spectral images. These information items are transferred to the control device 118 of the operating machine 100, the server 704, the user terminals 710 and 712, and the like.

The LEDs 72 are multiple light sources placed around the tip of the lens barrel 70 at equal intervals in an embedded state. By having the LEDs as light sources, the imaging receives less influence from the environment, and spectroscopic information can be obtained stably. The main lens 74 is a lens to introduce reflected light from an object Om to the aperture stop 76. The aperture stop 76 is a shield used for adjusting the amount of passing light. The filter 78A changes the spectral transmittance spatially and continuously. In other words, the filter 78A has multiple spectral characteristics. Note that the directivity of continuity of the spectral transmittance of the filter 78A is not limited as long as it changes in one direction on the surface. For example, on the surface of the main lens 74 perpendicular to its optical axis, the continuous change may go in the up-and-down direction as in FIG. 17A, the direction perpendicular to the up-and-down direction, or in an obliquely crossing direction. The condenser lens 79 is a lens to introduce light passed through the filter 78A to the microlens array 62.

Reflected light from the object Om receiving light from the LEDs 72 and other light sources is incident on the main lens 74. Light flux incident on this main lens 74 is a target of spectral reflectance measurement. The light flux incident on the main lens 74 is a collection of innumerable rays of light, and the rays pass different positions of the aperture stop 76. The reflected light condensed by the main lens 74 is adjusted for the amount of the light to pass by the aperture stop 76, and is incident on the filter 78A. Note that the aperture stop 76 is set on the filter 78A in the embodiment, but not limited as such. Rays incident on the filter 78A pass through the filter at areas having different values of spectral transmittance. The rays of light having passed through the filter 78A are condensed by the condenser lens 79, and form an image once in the neighborhood of the microlens array 62. Note that the microlens array 62 is installed to have the microlenses (small lenses) placed in the direction perpendicular to the optical axis of the main lens 74. Rays once having formed an image pass through the microlens array 62, to reach respective positions on the photodetector array 64. In other words, a position on the light receiving surface of the photodetector array corresponds to a position on the filter 78A through which a ray of light has passed. Therefore, the spectral reflectance of each point on the object Om can be measured at the same time.

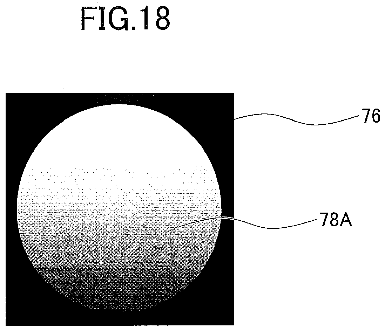

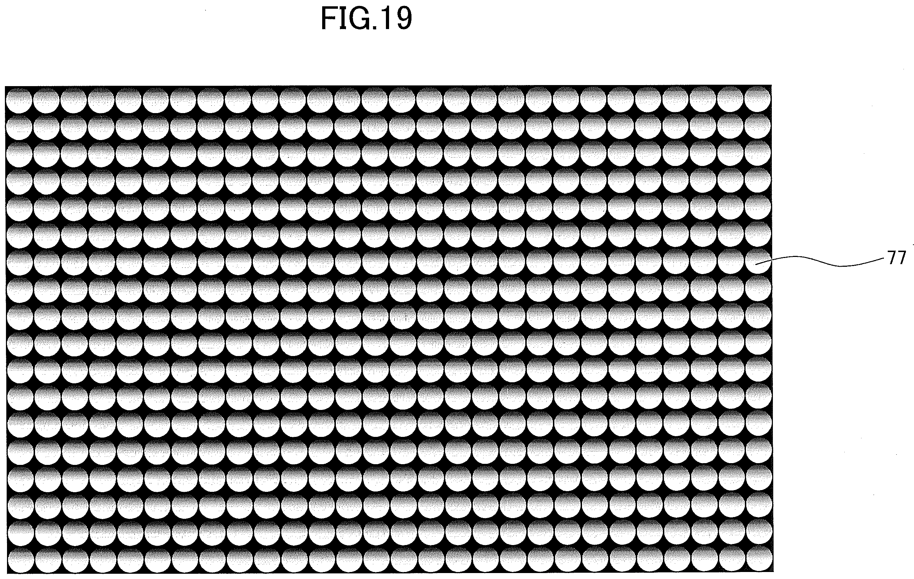

FIG. 18 is a front view of the filter 78A and the aperture stop 76 used in the embodiment. A lower part of the filter 78A has a peak of the spectral transmittance at a shorter wavelength, and an upper part has a peak at a longer wavelength. In this case, a captured image is formed of arrayed small circles as illustrated in FIG. 19. Circles are formed because the shape of the aperture stop 76 of the main lens 74 is circular. Each small circle will be referred to as a "macro pixel" below. By gathering all macro pixels 77, an image is formed. Each macro pixel 77 is formed immediately below the corresponding small lens (microlens) that constitutes the microlens array 62. The diameter of a macro pixel 77 is virtually the same as the diameter of a microlens.

As illustrated in FIGs. 17A-17B, a ray of light that has passed through a lower part of the filter 78A reaches an upper part of a macro pixel 77, and a ray of light that has passed through an upper part of the filter 78A reaches a lower part of the macro pixel 77. By the arrangement in which a lower part of the filter 78A has a peak at a shorter wavelength, and an upper part has a peak at a longer wavelength in the spectral transmittance, a ray of light having a shorter wavelength reaches an upper part of a macro pixel 77, and a ray of light having a longer wavelength reaches a lower part of the macro pixel 77. The FPGA 66 generates a spectral image from the spectroscopic information from pixels having respective wavelengths light reached. Thus, multiple spectral images for desired wavelengths can be obtained. The spectral reflectance calculation unit 68 calculates the average value for each row of macro pixels 77, and takes the spectroscopic intensity of illumination of the LEDs 72 and the like, the spectral transmittance of the main lens 74 and the condenser lens 79, the spectral transmittance of the filter 78A, and the spectroscopic sensitivity of the photodetector array 64 into consideration, to calculate the spectral reflectance.

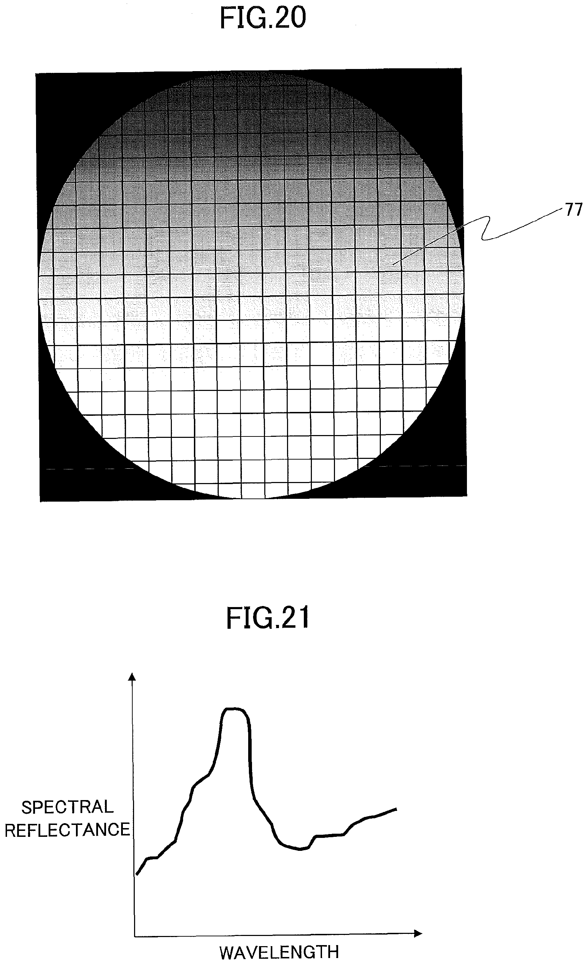

FIG. 20 illustrates an enlarged view of a macro pixel 77. Here, consider a case where a macro pixel 77 includes 19 by 19 pixels. From this single macro pixel 77, the spectral reflectance can be obtained for a point on the object Om as a specimen, as follows. First, steps to calculate the reflectance on the side of the shortest wavelength ($\lambda$s) will be described. Data obtained from the multi-spectrum camera device 450 is output values from the photodetectors, which correspond to amounts of rays of light incident on the photodetectors. An amount of rays of light is a product of five characteristic values at the wavelength Xs, which are the spectroscopic intensity of illumination of the LEDs 72 and the like; the spectral reflectance of the object Om; the spectral transmittance of the optical system (the main lens 74 and the condenser lens 79); the spectral transmittance of the filter 78A; and the spectroscopic sensitivity of the photodetector array 64. Therefore, to calculate the reflectance the object Om at $\lambda$s, the output value may be divided by the four values other than the spectral reflectance.

As the output value here, a value is used that is obtained by dividing the total of output values of 19 pixels on the lowermost row in FIG. 20, by the area where the macro pixel 77 is formed. The "area where the macro pixel 77 is formed" is an area where rays of light reach, other than the area painted in black in FIG. 20. The output value is defined as such to normalize the output value of each line. By these steps, a relative value of the reflectance at $\lambda$s can be obtained. To obtain the absolute value, calibration is required separately. The spectroscopic intensity of illumination of the LEDs 72 and the like, the spectral transmittance of the main lens 74 and the condenser lens 79, the spectral transmittance of the filter 78A, the spectroscopic sensitivity of the photodetector array 64, and the area of each row of the macro pixel 77 are known at design time. By applying the above process to each row of the macro pixel 77, the reflectance can be obtained at 19 wavelengths.

An example of such a measurement result is illustrated in FIG. 21. The horizontal axis represents the wavelength, and the vertical axis represents the relative value of the spectral reflectance. So far, the process applied to one macro pixel 77 has been described. By applying the same process to all macro pixels 77, two-dimensional spectral reflectance can be measured by the filter 78A. The filter 78A can be manufactured from a transparent substrate such as an optical glass having vapor deposition applied for forming a thin film whose thickness changes in a wedge shape. In the embodiment, the material of the thin film is niobium pentoxide, and the material on the short wavelength side is tantalum pentoxide. The thickness of the thin film is several dozen to several hundred nm. A thinner film corresponds to a shorter wavelength, and a thicker film corresponds to a longer wavelength. Since the thickness of the thin film changes in a wedge shape (no stepping), the spectral transmittance also changes continuously.

Since interference of light controls the spectral transmittance, a condition under which transmitted light is intensified corresponds to a peak wavelength of the spectral transmittance. The thickness of the transparent substrate may be set to be capable of holding the filter. For a lens designed to be positioned close to the aperture stop, it is preferable to use a thinner transparent substrate. For example, about 0.5 mm may be appropriate. By using the filter 78A having a continuous spectral transmittance characteristic as described above, the continuous spectral reflectance can be directly obtained at the same time as the imaging. Thus, an estimation process is unnecessary, and the two-dimensional spectral reflectance having robustness with respect to noise can be measured.

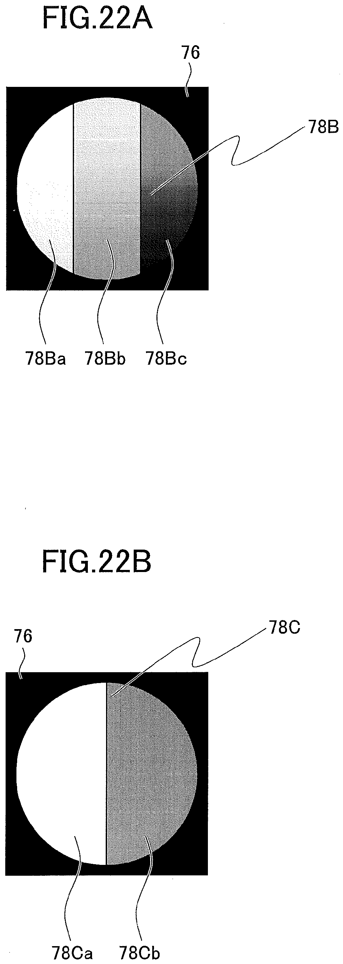

Next, another example of a filter will be described that can be used for the multi-spectrum camera device 450 in the embodiment by using FIGs. 22A-22B. A filter 78B in FIG. 22A is configured to have partitioned transmission bands. Specifically, the filter 78B is constituted with a filter 78Ba that corresponds to a wavelength region from 400 nm to 500 nm; a filter 78Bb that corresponds to a wavelength region from 500 nm to 600 nm; and a filter 78Bc that corresponds to a wavelength region from 600 nm to 700 nm. As such, the filter 78B is a filter whose spectral transmittance changes continuously even in the ultraviolet region and the infrared region. Each of the filters 78Ba, 78Bb, and 78Bc is a filter whose spectral transmittance changes spatially. In the example here, the wavelengths becomes longer from the lower side to the upper side in the figure. The longitudinal direction of the filters 78Ba, 78Bb, and 78Bc does not need to be specifically oriented. In other words, the requirement for the filter is to have an area where the spectral transmittance changes continuously, not the directivity. Also, the filters 78Ba, 78Bb, and 78Bc are not limited to be configured as described above, as long as each filter includes at least a part of the wavelength region different from the others. The transmission bands are just examples, and the ranges are not limited to these values. By partitioning the filter in this way, the wavelength width corresponding to a single pixel can be set narrow. In other words, it is possible to measure the spectral reflectance with high resolution in terms of the wavelength. Also, by having the filters partitioned and placed, compared to an elongated filter, continuity of the spectral transmittance can be secured within a narrow aperture diameter.

Note that to use light efficiently, the shape of the aperture stop 76 may be formed to have a polygonal shape such as a rectangle, or any other desired shape.

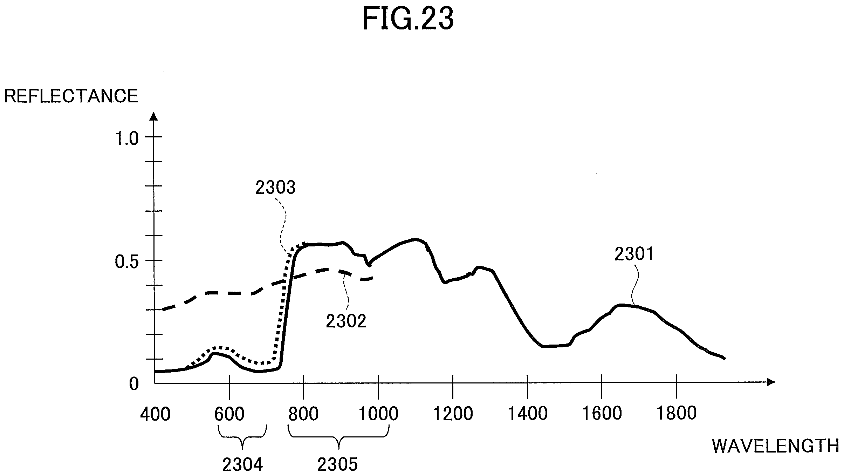

FIG. 23 illustrates a typical spectrum of the spectral reflectance for a leaf of a plant. A solid line 2301 represents a spectrum of a normal leaf (the plant activity is high), and a dashed line 2302 represents a spectrum of a withered leaf (the plant activity is low). As designated by the solid line 2301 in this figure, the normal leaf whose plant activity is high exhibits a low reflectance in a visible red zone (and a shorter wavelength region) 2304 around the wavelength 660 nm, due to light absorption by chlorophyll as a kind of chloroplast. In contrast, the normal leaf exhibits a high reflectance in a near-infrared region 2305 from 700 nm to 1100 nm. On the other hand, the withered leave whose plant activity is low exhibits a higher reflectance in the visible red zone 2304 than the normal leaf, because chlorophyll has been decomposed, and light is less absorbed in the visible red zone 2304. Note that it has been understood that this tendency is seen regardless of types of plants. Thereupon, using the following Formula 9 with a spectral reflectance R in the visible red zone 2304 and a spectral reflectance IR in the near-infrared region 2305, the normalized vegetation index (NDVI) can be obtained.

$$NDVI=(IR-R)/(IR+R)  (Formula\ 9)$$

Generally, the normalized vegetation index NDVI takes a value between -1 and +1, and a greater NDVI value represents a higher plant activity. By using the multi-spectrum camera device 450, in theory, the normalized vegetation index NDVI can be obtained in the entire imaging area. Thus, a filter 78C in FIG. 22B may be adopted as the filter of the multi-spectrum camera device 450 in the embodiment. The filter 78C includes a filter 78Ca that corresponds to a wavelength region in a visible red zone around 660 nm, and a filter 78Cb that corresponds to a wavelength region in a near-infrared zone around 770 nm. Note that as the near-infrared filter 78Cb, a filter that corresponds to a wavelength region around 785 nm or 900 nm may be adopted. In this case, the wavelength 785 nm can be easily obtained by a LED. The LEDs 72 are installed so that a half of the LEDs emit light having a high intensity around the wavelength 660 nm, and the other half emit light having a high intensity around the wavelength 770 nm. The multi-spectrum camera device 450 configured as such irradiates a target plant with the LED light, to capture an image of reflected light. Then, the FPGA 66 obtains a spectral image at the wavelength 660 nm, and a spectral image at the wavelength 770 nm. The spectral reflectance calculation unit 68 obtains the spectral reflectance at a desired position or in an area in these spectral images. Further, the CPU in the spectral reflectance calculation unit 68 applies Formula 9 for obtaining the normalized vegetation index NDVI. Note that the normalized vegetation index NDVI may not be obtained in the multi-spectrum camera device 450, but in the control device 118 of the operating machine 100 or the server 704 that may obtain the spectral images and information about spectral reflectance, to apply Formula 9. Note that the normalized vegetation index NDVI for each of the crops is transmitted to the database 708, and accumulated. Also, the FPGA 66 may be configured to calculate an NDVI image having an NDVI value for each pixel based on the spectral images described above. Note that raising states of plants may be grasped by using just the spectral reflectance of a wavelength in the visible red zone (for example, 660 nm), not using the normalized vegetation index NDVI. This is because in this visible red region, the spectral reflectance changes greatly for different values of the plant activity. Thus, not only the growth situation can be grasped, but also processing and determinations can be expedited because calculation is omitted for measuring the spectral reflectance in the near-infrared region, and for the normalized vegetation index NDVI. On the other hand, if the normalized vegetation index NDVI is calculated, information can be obtained for normalized, more precise raising states (the plant activity).

Also, daily observation of the normalized vegetation index NDVI makes it possible to predict harvest time correctly. For example, in a case of a leaf vegetable, it is desirable to harvest the vegetable when the normalized vegetation index NDVI is maximum (the plant activity is the highest). The maximum value of the normalized vegetation index NDVI and an expected date when the NDVI becomes maximum depend on the kind of produce. Therefore, a range of the normalized vegetation index NDVI is determined for each kind of plants to be harvested. This can be done on the server 704 or the user terminal 710 or 712 by using data of the normalized vegetation index NDVI accumulated in the database 708. For example, the same kinds of multiple crops may be experimentally observed even after respective maximal values of the normalized vegetation index NDVI have been observed, to get a degree of variation from which a range of the normalized vegetation index NDVI when to harvest may be determined (for example, for lettuce, the NDVI range may be between 0.5 and 0.55). Then, crops can be harvested when the normalized vegetation index NDVI obtained by the multi-spectrum camera device 450 or the like falls within the range. Further, the harvest time may be predicted by statistically calculating a tendency of daily variation of the normalized vegetation index NDVI for each crop from the accumulated data.

Further, quality (sugar content) of deliverables (fruit) may be determined from color by using the multi-spectrum camera device 450. In this case, the filter 78B in FIG. 22A is used that has the partitioned transmission bands (from 400 nm to 500 nm (78Ba), from 500 nm to 600 nm (78Bb), and from 600 nm to 700 nm (78Bc)), and further, a color sensor is used that has an RGB color filter disposed in a Bayer array for each photodetector (pixel) of the photodetector array 64. This RGB color filter has peaks (maximal values) of the spectrum around 470 nm for B (blue), around 540 nm for G (green), and around 620 nm for R (red). The spectral characteristics of the filters 78Ba, 78Bb, and 78Bc constituting the filter 78B are different from those of the RGB filters constituting the second filters in the color sensor, respectively. By having rays of light pass through the filters constituting the filter 78B and the filters constituting the second filters in the color sensor, spectroscopic information can be obtained at the same time, which may be equivalent to that obtained with 3 by 3, or nine types of band pass filters. However, strictly, since light can transmit only parts of the spectroscopic transmission areas of the respective filters, six types of the spectroscopic information can be obtained substantially in the embodiment. By obtaining the six types of the spectroscopic information in this way, a spectrum in the natural world can be measured precisely, and imaged color can be recognized correctly. This multi-spectrum camera device constitutes a colorimetry camera device that can measure visible light precisely. For example, for a fruit whose sugar content increases as it becomes ripe and redder, such as a certain type of strawberry, the sugar content can be evaluated by using the multi-spectrum camera device (the colorimetry camera device) 450 that can obtain the spectral reflectance in the visible red zone in the spectral image of the entire fruit.

Further, for a fruit having thin pericarp, such as a peach fruit, the sugar content can be evaluated by the multi-spectrum camera device 450 measuring the spectral reflectance in the near-infrared region.

Further, the multi-spectrum camera device 450 can measure the amount of water contained in a green leaf of a plant, non-destructively and contactless. The measurement of the amount of water is based on capturing change of the spectral characteristic on the surface of a green leaf of a plant, which occurs when water becomes insufficient in the plant, and the plant is exposed to water stress. As illustrated in FIG. 23, between the visible red zone and the near-infrared region, there is an area where the reflectance increases steeply (a red edge). It has been known that when a plant is exposed to water stress, the area of increasing reflectance shifts toward the blue color side (leftward) where the wavelength is shorter (blue shift). A dotted line 2303 in FIG. 23 represents an external appearance of a blue shift in a case where water stress is given. If the amount of shift can be detected, the amount of water in leaves of a plant (degree of water stress) can be identified. Thereupon, to detect such a degree of water stress, specifically, to measure the reflectances at multiple wavelengths in an area between the visible red zone and the near-infrared region where the reflectance increases steeply, the multi-spectrum camera device 450 includes the spectroscopic filter that can correspond to the multiple wavelength regions. For example, the spectroscopic filter may be a filter whose characteristic changes continuously from the visible red zone to the near-infrared region as is the filter 78A, or may be a filter to select desired wavelengths (for example, 715 nm and 740 nm) to be transmitted.

By measuring the reflectances at these desired wavelengths in the area between the visible red zone and the near-infrared region where the reflectance increases steeply, and comparing the reflectances with a reference reflectance (for example, spectral reflectances at the respective wavelength in a state in which no water stress is given), the amount of shift can be detected. The LEDs 72 installed and used in this case may be those which can output these desired wavelengths in the area between the visible red zone and the near-infrared region where the reflectance increases steeply. Alternatively, illumination by the LEDs 72 may be omitted and the reflectance measurement may be executed by using solar light. If using solar light, the spectral reflectances at the multiple wavelengths obtained from solar light reflected on the plant, may be divided by a reflectance obtained from solar light reflected on a standard white board installed in a farming field or the operating machine 100, respectively; and by comparing the normalized levels with each other, it is possible to make errors of measured values due to change of the amount of solar light have less influence. Note that the spectral reflectances are not limited to be measured at two wavelengths, but may be measured at three or more wavelengths to raise precision. In this way, measuring the amount of water contained in plants by the multi-spectrum camera device 450, makes it possible to execute measurement on plants to be measured, non-destructively, contactless, and quickly.

Note that two units of the multi-spectrum camera devices (colorimetry camera devices) 450 may be combined to measure a distance based on the same principle as adopted in the stereo camera device 410 described above. This makes it possible to obtain an image, spectroscopic information, and distance information (parallax information) of an object by a single imaging operation.

<Environmental information obtainment unit>

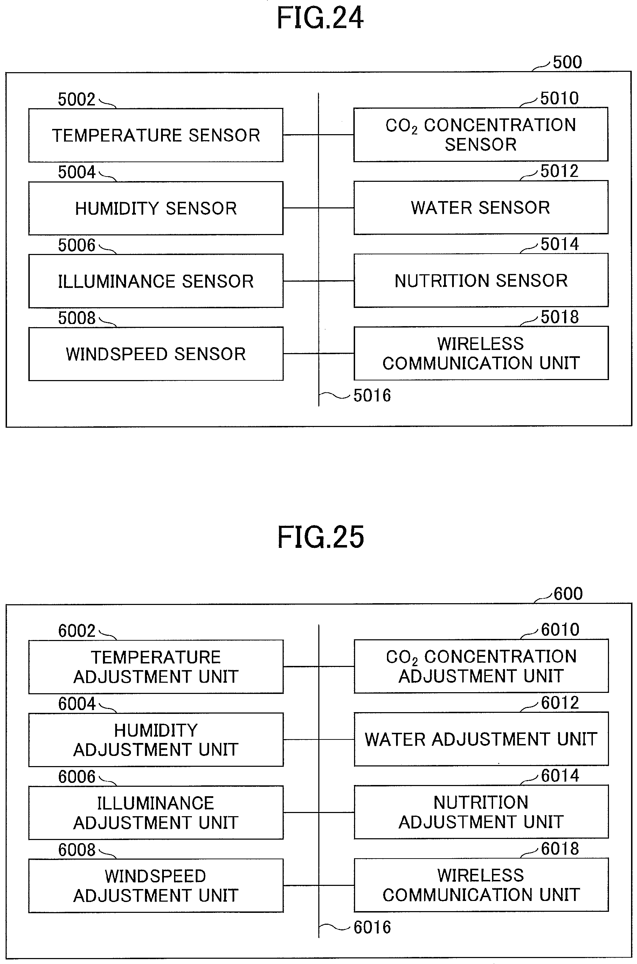

FIG. 24 is a schematic view illustrating an environmental information obtainment unit 500. In contrast to the plant information obtainment unit 400 (including the stereo camera device 410, the polarization camera device 430, and the multi-spectrum camera device 450) of the operating machine 100, which can directly obtain information about a plant itself, the environmental information obtainment unit 500 obtains environmental information that is used for estimating information about a plant indirectly. The environmental information obtainment unit 500 obtains environmental information such as temperature, humidity, and illuminance in the plant cultivation facility 10, and transmits the obtained environmental information to the server 704. The environmental information obtainment unit 500 includes a temperature sensor 5002, a humidity sensor 5004, an illuminance sensor 5006, a wind speed sensor 5008, a $CO_2$ concentration sensor 5010, a water sensor 5012, a nutrient sensor 5014, a bus line 5016 to connect the various sensors electrically, and a wireless communication unit 5018. Note that although just single instances of the respective sensors are illustrated in FIG. 24 for the sake of simplicity, multiple instances are actually disposed because information needs to be obtained all over the plant cultivation facility 10.

The temperature sensor 5002 is a generic sensor that can obtain the atmosphere temperature, such as a thermistor, to obtain the temperature in the plant cultivation facility 10. The humidity sensor 5004 is a generic sensor that can obtain atmosphere humidity, such as a variable resistance type and an electrostatic capacitance type, to obtain the humidity in the plant cultivation facility 10. The illuminance sensor 5006 is a generic sensor that can obtain illuminance of surrounding light, such as a phototransistor and a photodiode, to obtain the illuminance in the plant cultivation facility 10. The wind speed sensor 5008 is a sensor that has a passage in a predetermined casing to be capable of detecting at least wind speed, to obtain the wind speed in the plant cultivation facility 10. The $CO_2$ concentration sensor 5010 is a generic sensor that can obtain concentration of $CO_2$ (carbon dioxide) in the atmosphere, such as an NDIR (non-disperse Infrared Gas Analyzer) and a photoacoustic type sensor, to obtain the $CO_2$ concentration in the plant cultivation facility 10. The water sensor 5012 is a generic sensor that can obtain the amount of water such as a variable resistance type and an electrostatic capacitance type, to obtain the amount of water in the soil or a urethane foam in which plants are planted in the plant cultivation facility 10. The nutrient sensor 5014 is a generic sensor that can obtain nutrient concentration based on measurement of electric conductivity and the like, to obtain the amount of nutrient in the soil or a urethane foam in which plants are planted in the plant cultivation facility 10. The wireless communication unit 5018 transmits the environmental information obtained by the sensors such as the temperature sensor 5002, associated with IDs of the sensors, to the server 704.

<Environment adjustment unit>

FIG. 25 is a schematic view illustrating the environment adjustment unit 600. The environment adjustment unit 600 adjusts the environment in the plant cultivation facility 10 with respect to the temperature, the humidity, the illuminance, and the like, based on information from the server 704. The environment adjustment unit 600 includes a temperature adjustment unit 6002, a humidity adjustment unit 6004, an illuminance adjustment unit 6006, a wind speed adjustment unit 6008, a $CO_2$ concentration adjustment unit 6010, a water adjustment unit 6012, a nutrient adjustment unit 6014, a bus line 6016 to connect the various sensors electrically, and a wireless communication unit 6018. Each of the units described above is controlled based on a control signal from the server 704, received by the wireless communication unit 6018.

The temperature adjustment unit 6002 executes atmosphere adjustment for the entire plant cultivation facility 10, to adjust the temperature in the plant cultivation facility 10. Note that the temperature adjustment unit 6002 may be configured to have pipes with holes for cooling and heating arranged to cover fixed points, such as leaves and growing points of plants, and to have nozzles extended toward the fixed points, so as to adjust temperatures at the fixed points. By adjusting the temperature with considering an optimum temperature, temperature difference between day and night, or the like, it is possible to adjust photosynthesis and breathing, to accelerate or decelerate the growth of plants. The humidity adjustment unit 6004 adjusts the humidity in the plant cultivation facility 10, by humidification and dehumidification technologies of a desiccant type. By controlling the humidity, transpiration from plants can be adjusted, which also makes it possible to accelerate or decelerate the growth of plants. The illuminance adjustment unit 6006 is LEDs or the like that are controlled to be turned on and off when necessary so that the amount of light is adjusted, to adjust illuminance in the plant cultivation facility 10. Since light influences greatly photosynthesis of plants, controlling the illuminance also makes it possible to control the growth of plants. The wind speed adjustment unit 6008 adjusts wind speed in the plant cultivation facility 10, by making an air blast by a blower. Especially, by controlling the wind speed on surfaces of leaves of plants, the transpiration rate of the plants can be adjusted, which also makes it possible to accelerate or decelerate the growth of plants. The $CO_2$ concentration adjustment unit 6010 introduces outside air, or burns fuel to generate $CO_2$ in the plant cultivation facility 10, for adjusting the $CO_2$ concentration. Since the rate of exchanging $CO_2$ by photosynthesis and breathing is influenced by the $CO_2$ concentration, controlling the $CO_2$ concentration is expected to have effects to activate photosynthesis and breathing, and to accelerate the growth of plants. Note that the $CO_2$ concentration adjustment unit 6010 may not generate $CO_2$, but may reuse $CO_2$ generated at another facility. The water adjustment unit 6012 supplies water, to adjust the amount of water in the soil, the urethane foam, or the like in the plant cultivation facility 10. The amount of water in the soil or the like influences the transpiration of plants, and hence, contributes to adjusting the growth of plants. The nutrient adjustment unit 6014 supplies nutrient solution, to adjust the amount of nutrient in the soil, the urethane foam, or the like in the plant cultivation facility 10. By controlling the amount of nutrient, the growth of plants can be adjusted.

The adjustment units described above are usually controlled by the server 704 so that environmental conditions are maintained and adjusted to predetermined setting conditions.

[Operations of system]

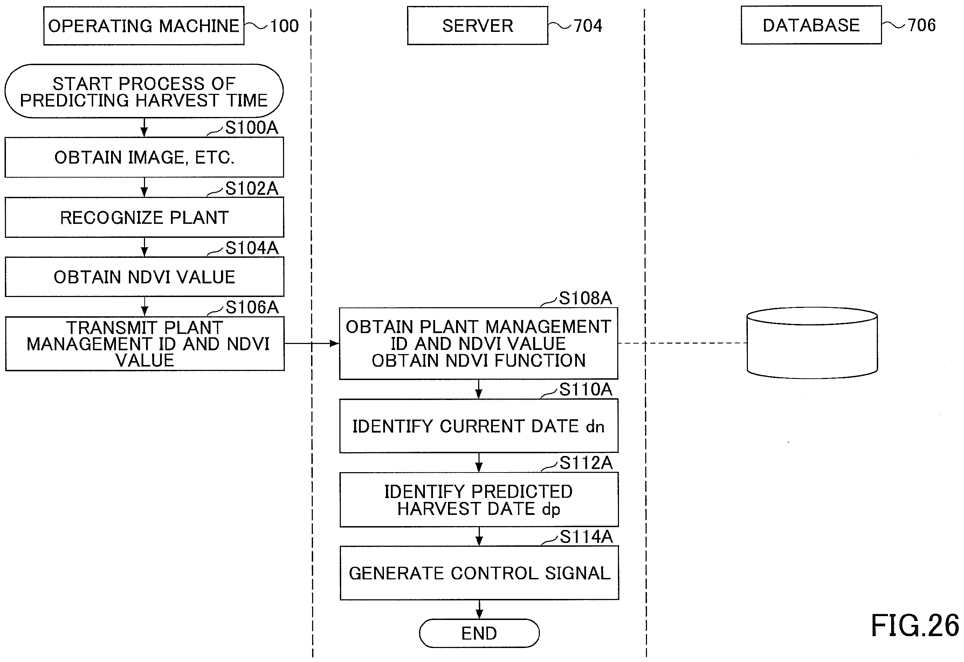

By using FIG. 26 to FIG. 31, operations of the plant cultivation system 1 will be described according to the embodiment. Operations of the plant cultivation system 1 illustrated in flowcharts in these drawings are representative operations. Other operations and more detailed operations may have been described or will be described by words. Also, information exchange among the operating machine 100, the server 704, the user terminals 710 and 712, the environmental information obtainment unit 500, the environment adjustment unit 600, and the like are executed by communication by wire or wirelessly, and directly or with relaying via wireless access points, as has been described. If wireless communication by a radio wave is not effective, wireless information communication using visible light or invisible light may be executed.

Note that although in the description so far and in the following, an operation mainly executed by the server 704 is, more precisely, an operation executed by the CPU of the server following a program stored in the SSD or the like, the operation is assumed to be executed by the server 704 for the sake of simplicity of the description. Also, although in the description so far and in the following, an operation mainly executed by the operating machine 100 is, more precisely, an operation executed by the control device 118 installed in the operating machine 100 following a program stored therein, the operation is assumed to be executed by the operating machine 100 for the sake of simplicity of the description. Further, although in the description so far and in the following, an operation mainly executed by the user terminals 710 and 712 is, more precisely, an operation executed by the CPU installed in the user terminal 710 and/or the user terminal 712 following a program stored in a recording medium, or a command of a user of the user terminal, the operation is assumed to be executed by the user terminal 710 and/or 712 for the sake of simplicity of the description. Furthermore, although in the description so far and in the following, an operation executed by the stereo camera device 410, the polarization camera device 430, the multi-spectrum camera device 450, the environmental information obtainment unit 500, the environment adjustment unit 600, or another device is, more precisely, an operation executed by a control processor or a CPU installed therein following a program stored in each of the devices and databases, the operation is assumed to be executed by the polarization camera device 430, the multi-spectrum camera device 450, the environmental information obtainment unit 500, the environment adjustment unit 600, or the other device for the sake of simplicity of the description.

[Process of predicting harvest time: first application example]

FIG. 26 is a flowchart illustrating a process of predicting harvest time according to an embodiment. The plant cultivation system 1 in the embodiment executes the process of predicting harvest time, to predict the harvest time of a target plant.

Specifically, the multi-spectrum camera device 450 of the operating machine 100 obtains an image (referred to as an "NDVI image", below) for obtaining a brightness image and a normalized vegetation index NDVI in a certain range that includes a target of harvest time prediction, and obtains the plant management ID of the target plant (a group of plants) from a two-dimensional code on a plate (not illustrated) that is placed in front of the plant (Step S100A). The plant management ID is associated with information about the target plant including its kind, and stored in the database 706.

The multi-spectrum camera device 450 recognizes the target plant based on the obtained brightness image and characteristic amounts stored in the storage unit by prior learning, to identify an area in the image that corresponds to the plant (Step S102A).

Based on the obtained NDVI image and the identified area of the plant, the multi-spectrum camera device 450 calculates an NDVI value that corresponds to the target plant (Step S104A). An average of the NDVI values in respective pixels in the area on the image corresponding to the plant is used as the NDVI value here.

The operating machine 100 transmits the plant management ID and the calculated NDVI value to the server 704 (Step S106A). The server 704 receives and obtains the plant management ID and the NDVI value, and based on the obtained plant management ID, obtains an NDVI function $N(d)$ stored in the database 706 (Step S108A). The NDVI function $N(d)$ here is a function of the number of days elapsed $d$ (0 to the harvest time $dh$) and an NDVI value, which has been obtained based on time series information of NDVI values of the target plant for a certain period of time when the above-mentioned setting conditions are satisfied in the environment. Since at least from the start of cultivation until the time of harvest, the degree of growth of the plant, or the NDVI value, increases while the number of days elapsed $d$ increases, the NDVI function $N(d)$ is a monotonically increasing function that satisfies $N'(d) \geq 0$, and hence, it is possible to identify from the NDVI value how many days have passed in the days to be elapsed for the plant.

The server 704 identifies a current day $dn$ from the obtained NDVI function $N(d)$ and the NDVI value (Step S110A). From the identified current day $dn$ and the harvest time $dh$, the server 704 calculates a period $dh-dn$ to be elapsed until the harvest, and based on the calculated period and a current day obtained by a clock built in the server 704, identifies a predicted harvest date $dp$ (Step S112A).

The server 704 controls the user terminals 710 and 712 to generate a control signal to display a screen based on the identified predicted harvest date $dp$, or generates a control signal for executing a process of adjusting harvest time, which will be described later (Step S114A). The generated control signal is used for various control operations. Then, having completed Step S114A, the operating machine 100 moves to a position around a next plant group being cultivated, and restarts the process starting from Step S100A.

Note that Steps S102A to S104A may be executed by the server 704. In this case, the operating machine 100 transmits information obtained at Step S100A to the server 704. Also, Step S106A does not need to be executed. Configured as described above, steps having much load can be executed on the server 704.

Also, an NDVI image may not be used, but the system may be configured to have the multi-spectrum camera device 450 obtain the NDVI value.

[Process of predicting harvest time: second application example]

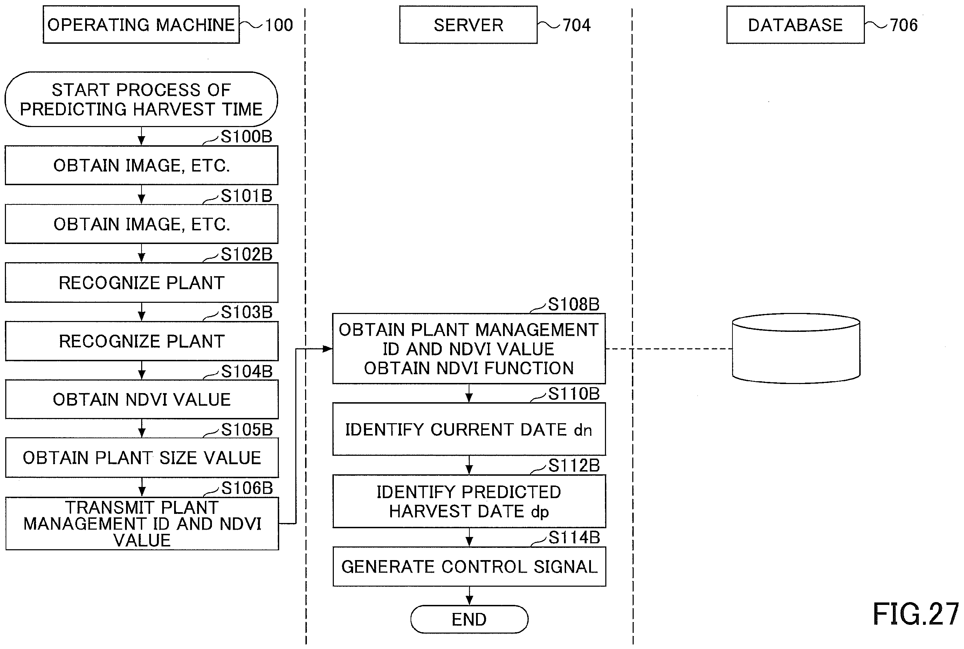

FIG. 27 is a flowchart illustrating another example of a process of predicting harvest time according to the embodiment. The plant cultivation system 1 in the second application example can execute the process of predicting harvest time, based on a plant size value obtained by the stereo camera device 410, in addition to, or instead of the NDVI value obtained by the multi-spectrum camera device 450 in the first application example. In the following, an example will be described that uses a plant size value in addition to the NDVI value.

The multi-spectrum camera device 450 of the operating machine 100 obtains a brightness image and an NDVI image in a certain range that includes a target of harvest time prediction (Step S100B). Also, the stereo camera device 410 of the operating machine 100 obtains a brightness image and a parallax image in a certain range that includes a target of harvest time prediction, and obtains the plant management ID of the target plant (a group of plants) from a two-dimensional code on a plate that is placed in front of the plant (Step S101B). Here, the plant management ID is obtained by the stereo camera device 410 having comparatively higher resolution in general, but may be obtained by the multi-spectrum camera device 450.

The multi-spectrum camera device 450 recognizes the target plant based on the obtained brightness image and characteristic amounts stored in the storage unit by prior learning, to identify an area in the image that corresponds to the plant (Step S102B).

The stereo camera device 410 recognizes the target plant based on the obtained brightness image and characteristic amounts stored in the storage unit by prior learning, to identify an area in the image that corresponds to the plant (Step S103B).

Based on the obtained NDVI image and the identified area of the plant, the multi-spectrum camera device 450 calculates an NDVI value that corresponds to the target plant (Step S104B).

Based on the obtained parallax image and the identified area of the plant, the stereo camera device 410 calculates a plant size value that corresponds to the target plant (Step S105B). The plant size value corresponds to the size of the plant, which can be calculated by the stereo camera device 410, for example, by measuring a distance between the branches for the same object in a position as captured in the previous imaging, or by measuring the size of a leaf.

The operating machine 100 transmits the plant management ID, the calculated NDVI value, and the plant size value to the server 704 (Step S106B).

Based on the received plant management ID, the server 704 obtains a harvest time identifying function H(d) stored in the database 706 (Step S108B). The harvest time identifying function H(d) here is a function defined by an NDVI function N(d) and a plant size function S(d), and as in the first application example, is a function of the number of days elapsed d (0 to the harvest time dh), an NDVI value, and a plant size value. It may be simply defined as

$$H(d) = \alpha N(d) + \beta S(d) \quad (\alpha \geq 0 \text{ and } \beta \geq 0)$$

where $\alpha$ and $\beta$ are weight coefficients defined depending on which one of the NDVI and the plant size is important as the reference value for harvesting that kind of plants. Therefore, similar to the harvest time identifying function H(d), the value is uniquely identified by the ID. Similar to the NDVI value, since at least until the time of harvest, the plant size value increases while the number of days elapsed d increases, the harvest time identifying function H(d) is a monotonically increasing function that satisfies H'(d)≥0, and hence, it is possible to identify from the NDVI value and the plant size value, how many days have passed in the days to be elapsed for the plant.

The server 704 identifies a current day dn from the harvest time identifying function H(d), the NDVI value, and the plant size value (Step S110B). From the identified current day dn and the harvest time dh, the server 704 calculates a period dh-dn to be elapsed until the harvest, and based on the calculated period and a current day obtained by the clock built in the server 704, identifies a predicted harvest date dp (Step S112B).

The server 704 controls the user terminals 710 and 712 to generate a control signal to display a screen based on the identified predicted harvest date dp, or generates a control signal for executing a process of adjusting harvest time, which will be described later (Step S114B). The generated control signal is used for various control operations. If controlling the user terminals 710 and 712 to generate a control signal to display a screen, the screen may be displayed in response to input from the user. Then, having completed Step S114B, the operating machine 100 moves to a position around a next plant group being cultivated, and restarts the process starting from Step S100B.

Note that Steps S101B to S105B may be executed by the server 704. In this case, the operating machine 100 transmits information obtained at Step S100B and Step S101B to the server 704. Also, Step S106B does not need to be executed. Configured as described above, steps having much load can be executed on the server 704.

When executing the process of predicting harvest time according to this application example, the multi-spectrum camera device 450 may be a device separate from the stereo camera device 410, but it is more preferable that two units of the multi-spectrum camera devices 450 are combined to measure a distance based on the same principle as adopted in the stereo camera device 410 as described above. By using such devices, a part of images used for processing in the multi-spectrum camera device 450 and processing in the stereo camera device 410 can be shared, and a more highly efficient and highly precise system can be implemented.

Note that although the plant size is obtained by the stereo camera device 410 in the application example, the plant size may be calculated by comparing with the image of the plate in front of the plant captured by the multi-spectrum camera device 450.

Also, an NDVI image may not be used, but the system may be configured to have the multi-spectrum camera device 450 obtain the NDVI value.

[Process of adjusting harvest time]

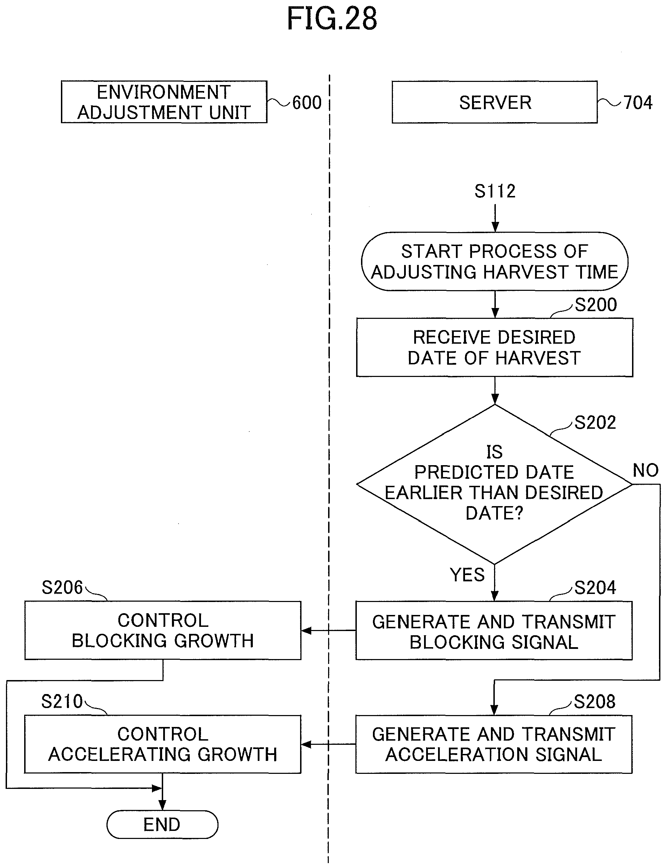

FIG. 28 is a flowchart illustrating a process of adjusting harvest time according to the embodiment. The plant cultivation system 1 in the embodiment executes a process of adjusting harvest time to adjust the harvest time of a target plant. Specifically, the server 704 receives a desired harvest date dw input by the user on the user terminal 710 (Step S200). This desired harvest date dw may be a date as is input by the user. Alternatively, the desired harvest date may be obtained by subtracting predetermined days taken for the delivery from a desired delivery date input by the user. In this case, the user orders a desired plant on the user terminal 710, and at the same time, inputs a desired delivery date and a desired delivery region. The server 704 receives the input desired delivery date and desired delivery region, and calculates the harvest date, which will be described later, by subtracting days taken for the delivery specific to the desired delivery region of the user, from the desired delivery date.

The server 704 identifies a target plant group whose desired harvest date has been calculated, by the ID, and determines whether the predicted harvest date dp obtained at Step S112A or B in the process of predicting harvest time is earlier than the desired harvest date dw (Step S202). If dw-dp>0 (YES at Step S202), the predicted harvest date is earlier than the desired harvest date, the server 704 calculates control conditions for decelerating the growth of the plant, and transmits a deceleration signal to execute the control to the environment adjustment unit 600 (Step S204).

Based on the received deceleration signal, the environment adjustment unit 600 executes control for decelerating the growth of the plant by environment adjustment by the temperature adjustment unit 6002, the illuminance adjustment unit 6006, and the like (Step S206). For example, the environment adjustment unit 600 has the temperature adjustment unit 6002 decrease the environmental temperature for the target plant group, and has the illuminance adjustment unit 6006 reduce the illuminance.

On the other hand, if dw-dp<0 (NO at Step S202), the predicted harvest date is behind the desired harvest date, the server 704 calculates control conditions for accelerating the growth of the plant, and transmits an acceleration signal to the environment adjustment unit 600 (Step S208). Based on the received acceleration signal, the environment adjustment unit 600 executes control for accelerating the growth of the plant by environment adjustment by the temperature adjustment unit 6002, the illuminance adjustment unit 6006, and the like (Step S210). For example, the environment adjustment unit 600 has the temperature adjustment unit 6002 increase the environmental temperature for the target plant group, and has the $CO_2$ concentration adjustment unit 6010 increase the $CO_2$ concentration. The control described above is based on a predicted harvest date dp and a desired harvest date dw, which may cause a sudden change in the environment in the plant cultivation facility 10. Thereupon, by executing control based on the time differential value of the days, the control may be executed with comparatively smaller change in the environment.

Note that if the predicted harvest date is the same as the harvest date (dw-dp=0), a control signal for continuing the growth at the same rate is transmitted to the environment adjustment unit 600.

Although the deceleration signal and the acceleration signal are distinguished in the description above, both are signals for controlling the environment adjustment unit 600, and may not be distinguished.

Also, instead of transmitting a control signal for continuing the growth at the same rate, transmitting such a control signal may be omitted.

[Process of exterminating noxious insects]

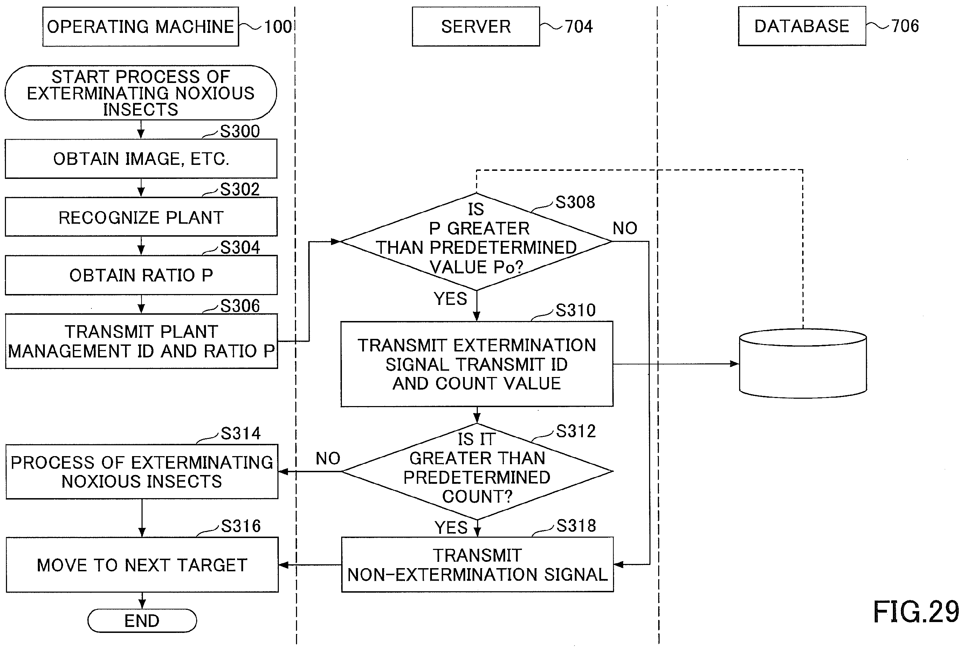

FIG. 29 is a flowchart illustrating a process of exterminating noxious insects according to the embodiment. The plant cultivation system 1 in the embodiment executes a process of exterminating noxious insects to exterminate noxious insects infesting a target plant.

Specifically, the polarization camera device 430 of the operating machine 100 obtains a brightness image and a polarization ratio image in a certain range that may include a target possibly requiring extermination of noxious insects, and obtains the plant management ID of the target plant (a group of plants) from a two-dimensional code on a plate that is placed in front of the plant (Step S300).

The polarization camera device 430 recognizes the target plant based on the obtained brightness image and characteristic amounts stored in the storage unit by prior learning, to identify an area in the image that corresponds to the plant (Step S302). The polarization camera device 430 recognizes noxious insects infesting the target plant based on the obtained polarization ratio image and the identified the area of the plant, and calculates a plant occupied ratio P that represents the ratio of the area infected by noxious insects to the target area (for example, leafs) in the area of the plant (Step S304).

The polarization camera device 430 transmits the calculated plant occupied ratio P and the plant management ID to the server 704 (Step S306). The server 704 receives and obtains the plant management ID and the plant occupied ratio P, and determines whether the obtained plant occupied ratio P is over a predetermined value P0 (for example, 5%) (Step S308).

If P>P0 (YES at Step S308), the server 704 generates an extermination signal that represents to execute a process of exterminating noxious insects, transmits the extermination signal to the operating machine 100, and transmits the plant management ID and a count value to the database 706 (Step S310). The count value here is an index value to count how many times the process of exterminating noxious insects has been executed. Since pesticide is generally used for exterminating noxious insects, depending on the kind of the plant, the number of times of extermination may need to be limited taking human health into consideration. The number of times of the process of exterminating noxious insects can be managed by the count value. Note that although the number of times described above is an index value that can indirectly measure the amount of sprayed pesticide, information that directly represents the amount may be used.

The server 704 determines whether the number of times counted as the count value exceeds a predetermined number of times set in advance (Step S312). If the server 704 has determined at Step S312 that the predetermined number of times has not been exceeded (NO at Step S312), the operating machine 100 sprays pesticide by using a pesticide spraying device (not illustrated) installed in the operating machine 100 based on the received extermination signal, to execute the process of exterminating noxious insects (Step S314).

After that, the operating machine 100 moves to a next target, and starts a process of exterminating noxious insects (Step S316).

On the other hand, if the server 704 has determined at Step S312 that the predetermined number of times has been exceeded (YES at Step S312), or if P≤P0 at Step S308 (NO at Step S308), the server 704 generates a non-extermination signal representing that a process of exterminating noxious insects is not to be executed, and transmits the signal to the operating machine 100 (Step S318).

Based on the received non-extermination signal, the operating machine 100 does not execute a process of exterminating noxious insects, moves to a next target, and starts a process of exterminating noxious insects (Step S316). In this case, the server 704 indicates to the user terminals 710 and 712 that extermination of noxious insects has not been executed. By this indication, the user may execute extermination of noxious insects manually. Note that it may be configured to generate a signal for controlling the operating machine 100 to move to a next target without executing a process of exterminating noxious insects at Step S316, without transmitting the extermination signal to the operating machine 100 at Step S310.

Although a polarization ratio image is used in the embodiment described above, a spectral image may be used. A noxious insect that cannot be recognized on a usual brightness image may be recognized on a spectral image.

[Process of illumination by supplementary light sources]

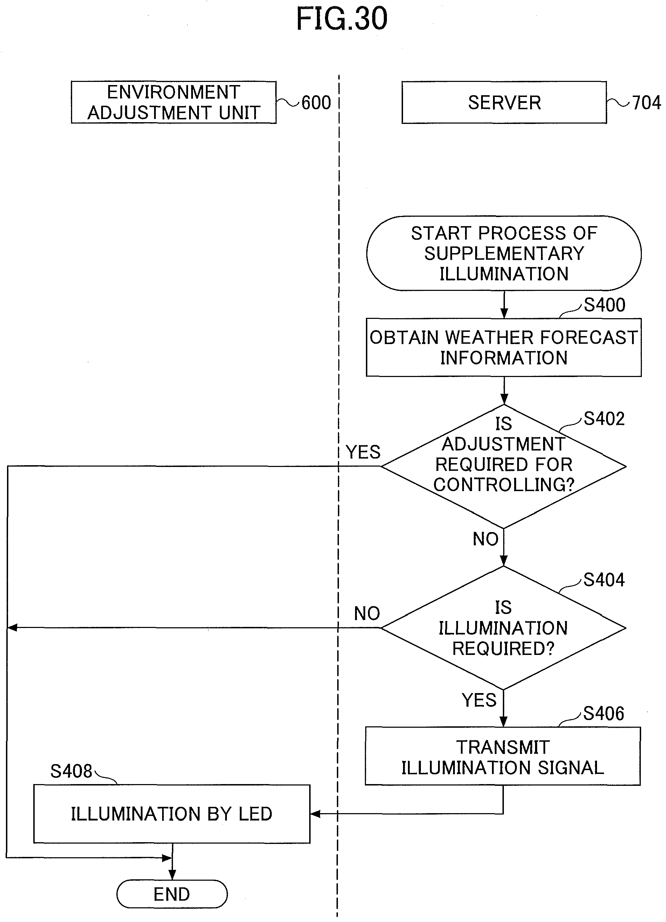

FIG. 30 is a flowchart illustrating a process of illumination by supplementary light sources according to the embodiment. The plant cultivation system 1 in the embodiment executes a process of illumination by supplementary light sources to illuminate plants by supplementary light sources to supplement solar light.

Specifically, the server 704 obtains weather forecast information from an external information source (not illustrated) via the Internet (Step S400). The server 704 determines whether to execute illumination by LEDs, based on an illumination condition of the LEDs set for the illuminance adjustment unit 6006, identified with the obtained weather forecast information by the process of adjusting harvest time. In other words, the server 704 determines whether adjustment is to be executed for decelerating the growth of the plant, by the process of adjusting harvest time illustrated in FIG. 28 (Step S402).

If adjustment is to be executed for decelerating the growth of the plant (YES at Step S402), illumination by the LEDs is not executed regardless of the weather forecast because illumination by the LEDs has an adverse effect.

If adjustment is not to be executed for decelerating the growth of the plant (NO at Step S402), the server 704 determines whether to execute illumination by the LEDs from the weather forecast information (Step S404).

If rainy weather or the like is forecasted by the weather forecast, and insufficient illuminance compared to a fine weather necessitates illumination by the LEDs (YES at Step S404), the server 704 generates an illumination signal representing that illumination by the LEDs is to be executed, and transmits the signal to the environment adjustment unit 600 (Step S406).

Based on the received illumination signal, the environment adjustment unit 600 executes illumination by the LEDs of the illuminance adjustment unit 6006 (Step S408).

On the other hand, if fine weather is forecasted by the weather forecast, and sufficient illuminance does not necessitate illumination by the LEDs (NO at Step S404), illumination by the LEDs is not executed. Note that illumination control of the LEDs may be executed based on illuminance obtained by the illuminance sensor 5006, along with the external information source, or instead of the external information source.

[Process of harvesting]

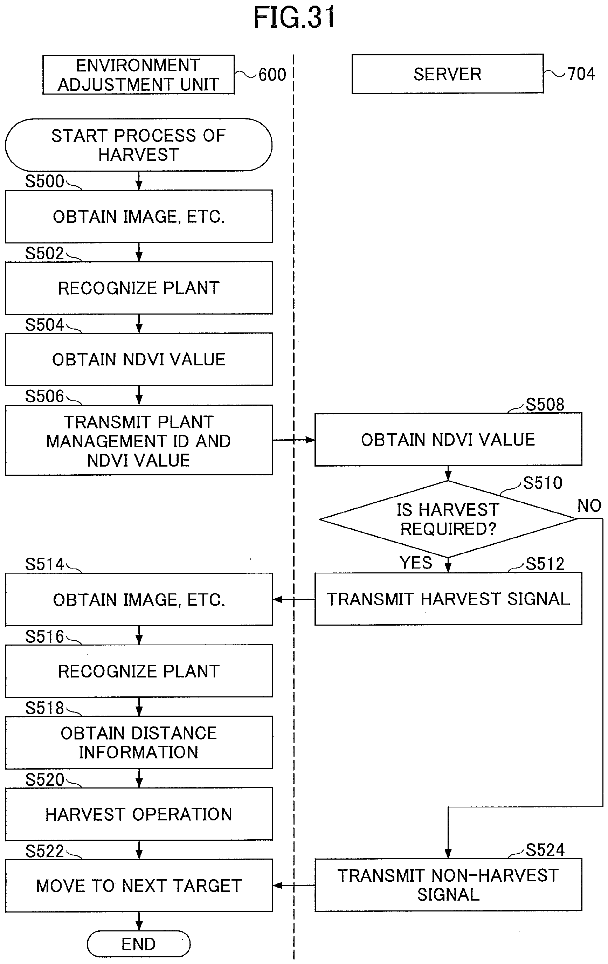

FIG. 31 is a flowchart illustrating a harvesting process according to the embodiment. The plant cultivation system 1 in the embodiment executes a process for harvesting to harvest a target plant in a harvest-required state. Specifically, the multi-spectrum camera device 450 of the operating machine 100 obtains a brightness image and an NDVI image in a certain range that includes a plant to be determined for harvesting, and obtains the plant management ID of the target plant from a two-dimensional code on a plate that is placed in front of the plant (Step S500).

The multi-spectrum camera device 450 recognizes the target plant based on the obtained brightness image and characteristic amounts stored in the storage unit by prior learning, to identify an area in the image that corresponds to the plant (Step S502).

Based on the obtained NDVI image and the identified area of the plant, the multi-spectrum camera device 450 calculates an NDVI value (dn) that corresponds to the target plant on the current day dn (Step S504).

The operating machine 100 transmits the plant management ID and the calculated NDVI value (dn) to the server 704 (Step S506). The server 704 receives and obtains the plant management ID and the NDVI value, and based on the obtained plant management ID, obtains an NDVI value (dh) stored in the database 706 (Step S508). The NDVI value (dh) here is an NDVI value that corresponds to the harvest time dh.

The server 704 compares the obtained NDVI value (dh) with the NDVI value (dn) received from the operating machine 100, to determine whether the target plant is in a harvest-required state (Step S510). If NDVI value (dn) ≥NDVI value (dh), namely, dn≥dh and determined as in a harvest-required state (YES at Step S510), the server 704 generates a harvest signal representing harvesting, and transmits the signal to the operating machine 100 (Step S512).

In response to receiving the harvest signal, the operating machine 100 has the stereo camera device 410 capture an image of the area that includes the target plant, to obtain a brightness image and a parallax image (Step S514).

The stereo camera device 410 recognizes the target plant based on the obtained brightness image and characteristic amounts stored in the storage unit by prior learning, to identify an area in the image that corresponds to the plant (Step S516).

Based on the parallax image, the stereo camera device 410 calculates distance information of the identified area (Step S518).

By using the obtained distance information, the operating machine 100 identifies a cut off position for harvesting, and executes cutting off and harvesting operations by the harvesting shears 108, the gripping arm 110 and the harvest box 112 of the harvesting device 106 (Step S520).

After that, the operating machine 100 moves to an adjacent plant until the harvesting process is completed for plants in the plant group, and moves to a next group when the entire plant group has been processed, to start a harvesting process (Step S522).

On the other hand, if NDVI value (dn)<NDVI value (dh) at Step S510, namely, if dn<dh and determined as not in a harvest-required state (NO at Step S510), the server 704 generates a non-harvest signal representing non-harvesting, and transmits the signal to the operating machine 100 (Step S524).

In response to receiving the non-harvesting signal, the operating machine 100 moves to a next group, to start a harvesting process (Step S522).

Note that when executing the harvesting process, the multi-spectrum camera device 450 may be a device separate from the stereo camera device 410, but it is more preferable that two units of the multi-spectrum camera devices 450 are combined to measure a distance based on the same principle as adopted in the stereo camera device 410 as described above. By using such devices, a part of images used for processing in the multi-spectrum camera device 450 and processing in the stereo camera device 410 can be shared, and a more highly efficient and highly precise system can be implemented.

Note that although the distance information is obtained by the stereo camera device 410 in the harvesting process, the distance information may be calculated by comparing with the image of the plate in front of the plant captured by the multi-spectrum camera device 450. In addition, any other device for obtaining distance information such as a laser radar may be used.

[Charge process]

As described above, the server 704 (or a server for charge management, the same shall apply below) also executes a charge process (a billing process). Since a system provider can continue the business, develop a new service, and improve current services by collecting system usage fees appropriately, it is a problem to be solved to execute a charge process automatically, correctly, and efficiently by the technology.

There are various forms of charge methods, which can be selected by the user of the plant cultivation system 1 in the embodiment. Forms of charging by the flat rate include, for example, (i) usage fee for the information communication system 1502 as illustrated in FIG. 2; (ii) rent for the system 1501 (including the plant information obtainment unit 400, the environmental information obtainment unit 500, and the environment adjustment unit 600) in the plant factory as illustrated in FIG. 1 (100 dollars per month for a single unit of the devices, 200 dollars per month for a single unit of the operating machines); and (iii) rent for the land (the plant factory) (15 dollars per square meter).

Forms of charging agreed to between the system provider and the user at the start of system use are registered in the database 708. The server 704 regularly (for example, once per month) transmits to the user terminals 710 and 712 the fees to be billed for the respective or combined forms of charging registered in the database 708, such as (i)-(iii) above.

Forms of charging by pay-per-use include, for example, (i) type of processing; (ii) processing time; (iii) size of a processed location; (iv) analysis executed by the server 704; (v) execution of harvest date prediction; (vi) obtainment of market demand; and (vii) amount of information communication in the plant cultivation system 1. These may be adopted respectively or combined. Information about these (i)-(vii) (or information to generate (i)-(vii)) is recorded on the database 708 by the server 704 as described above. For example, for a combination of (i) and (ii), the server 704 may generate a total fee of 100 dollars for the type of processing (harvesting, 5 dollars per hour) and the processing time (20 hours), or for a combination of (i) and (iii), the server 704 may generate a total fee of 200 dollars for the type of working (leveling the land, 0.2 dollars per square meter) and the size of a work location (1,000 square meters). In this way, since it is easy for the plant cultivation system 1 to identify contents of work (the type of work, the working hours, the size of a work location, the operating machine that has worked, etc.) during a predetermined period (for example, for one month), it is possible to charge a user the fee depending on the contents of work. Also, in addition to such a combination of (i) and (ii), the server 704 can generate, for example, a total fee of harvest date prediction (the form (v), 10 dollars per time) executed for several times (five times), which amounts to 50 dollars. The server 704 calculates respective fees for the work of (i) to (vii), based on information registered in the database 708, and executes billing on the user terminals 710 and 712 every predetermined period (for example, every half year).

Further, the plant cultivation system 1 provides forms of charging by the contingent fee. Forms of charging by the contingent fee include, for example, (i) charging by a certain ratio (for example, 20%) with respect to sales of plants harvested by using the plant cultivation system 1, (ii) charging by a certain ratio (for example, 50%) with respect to sales of the increased amount of crop yields for plants cultivated by the plant cultivation system 1, (iii) charging by (i) and (ii) added with flexible rates reflecting market prices of harvested plants (for example, increase the ratios of (i) and (ii) if the market prices rise suddenly beyond a certain level with respect to the reference prices, or reduce the ratios if the market prices crash). Information for calculating these forms of (i) to (vii) is recorded on the database 708. The server 704 calculates these fees from data stored in the database 708, and executes billing on the user terminals 710 and 712 every predetermined period (for example, every half year).

On the other hand, if the user satisfies a predetermined condition, the fee may be discounted. For example, if the user brings useful information about the plant cultivation system 1 (for example, a type of noxious insects, a generated place, and a generated population), the fee may be discounted by three dollar per time with a predetermined upper limit of times (ten times per month). A predetermined amount of money may be set as an upper limit. Also in such a case, the information may have been recorded on the database 708, and the server 704 may refer to the information for the discount. Thus, the system provider of the plant cultivation system 1 can obtain data required for efficient operations of the plant cultivation system 1 in the future, and the user may receive the discount of the system usage fee, which are advantageous for both.

Also, if the user operates on the operating machine 100 through remote control or the like, the system usage fee may be reduced from that of automatic control. Pricing in such cases is based on the value provided by the plant cultivation system 1, namely, the higher the value is (automatic control, then, remote control in this order), the higher the fee is set. The server 704 obtains information for such discounts from data stored in the SSD in the databases 706-708 and the server 704, calculates the reduced rate, and executes billing on the user terminals 710 and 712 with the calculated discounted fee. The server 704 can execute billing for the fees by the flat rate, pay-per-use fee, and the contingent fee, respectively and independently, or by a combination of these together. At this moment, the discount described above is also taken into account. In this way, the plant cultivation system 1 can automatically obtain and automatically sum up relevant information from the start of work to the completion of the work, even up to retail sale of crops after the harvest, and hence, can execute the charge process correctly and efficiently.

Note that the user of the plant cultivation system 1 may execute electronic payment by using a credit card, a debit card, and any other types of electronic money on the user terminals 710 and 712. Also, bank transfer may be acceptable. If the server 704 cannot confirm payment of the fee by a predetermined due date after having sent the bill on the user terminals 710 and 712, the server 704 may send a reminder on the user terminals 710 and 712, or may send the reminder by other means such as post. If the server 704 cannot confirm payment of the fee by the predetermined due date even after having sent the reminder, the server 704 may inhibit the user from using a part or all of the plant cultivation system 1. Thus, it is possible to restrict use of the plant cultivation system 1 by the user who does not pay the usage fee.

[Irrigation control using PRI]

Since the NDVI is a value having a tendency not changing steeply, and hence, can be used for stable raising control. On the other hand, the NDVI is not suitable as an index for monitoring the state of a plant for a short cycle to control raising. Thereupon, using an index called "PRI" (Photochemical/Physiological Reflectance Index) is effective. The PRI is calculated by Formula (10) where R531 are R570 are reflectances at wavelengths 531 nm and 570 nm, respectively.

$$PRI = (R531 - R570)/(R531 + R570) \quad (Formula\ 10)$$

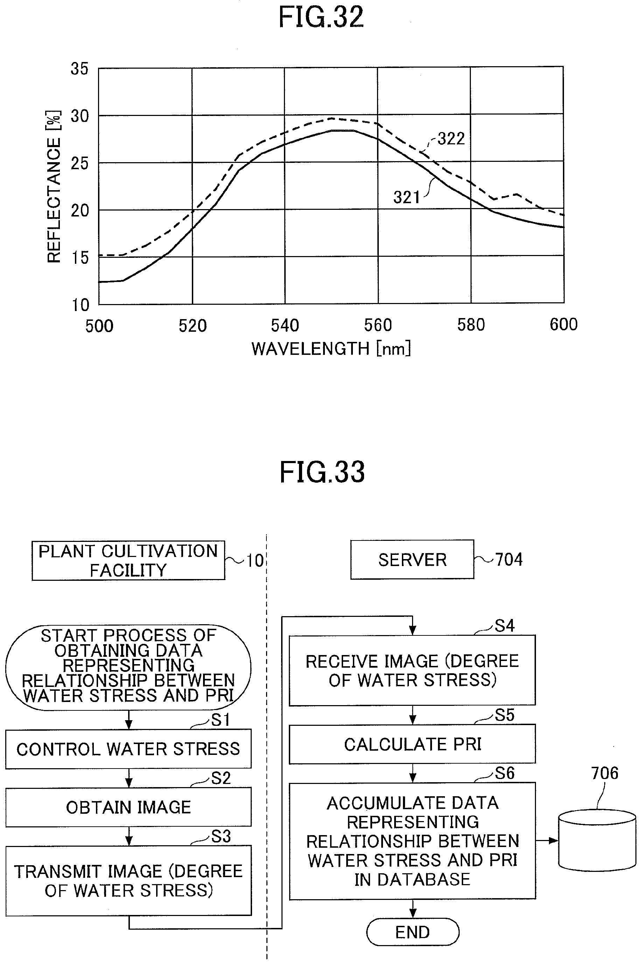

FIG. 32 is an example of a diagram for illustrating the PRI, in which the spectral reflectance spectrum between 500 and 600 nm is presented for leaves of a plant. A solid line 321 represents the spectral reflectance spectrum of a leaf not having water stress given, and a dashed line 322 is the spectral reflectance spectrum of a leaf having water stress given. Influence of water stress on the reflectance has been described with FIG. 23, and the spectral reflectance spectrums in FIG. 32 exhibit typical cases. In other words, although the reflectance varies in terms of absolute values and slopes with respect to the wavelength, depending on plants, air temperature, raising stages, and the like, the water stress changes the reflectance over a wide range of wavelengths. It has been considered that such change is caused due to change of the property of the pigment of chloroplasts included in a leaf when water stress is given to a plant.

Such change occurs within a comparatively short time, about an hour, after water stress was given. Therefore, if the change of the reflectance can be monitored, effective irrigation can be realized. The PRI described above is considered as an effective index to monitor the change of the reflectance.

Also, it has been known that the PRI has a highly positive correlation with the speed of photosynthesis (the greater the speed of photosynthesis, the closer the PRI becomes "1"). Further, it has been known that if water stress is given to a plant, pores of a leaf close, and the speed of photosynthesis reduces steeply. Therefore, such knowledge about the speed of photosynthesis and the PRI also gives support for measuring water stress quantitatively by using the PRI.

As has been described, the multi-spectrum camera device 450 can detect the reflectances of light at the wavelengths 531 nm and 570 nm, respectively. In this case, in the filter 78C in FIG. 22B, a filter that corresponds to a wavelength region around 531 nm is adopted as the filter 78Ca, and a filter that corresponds to a wavelength region around 570 nm is adopted as the filter 78Cb. In theory, the PRI can be obtained over the entire imaging area.

Also, for about a half of the LEDs 72 installed in the multi-spectrum camera device 450, LEDs having intensity around the wavelength 531 nm are adopted, and for the remaining half, LEDs having intensity around the wavelength 570 nm are adopted. The multi-spectrum camera device 450 configured as such executes illumination by the LED light on the target plant, and captures an image of reflected light. Then, the FPGA 66 obtains a spectral image in the wavelength 531 nm, and a spectral image in the wavelength 570 nm. The spectral reflectance calculation unit 68 calculates the spectral reflectances in the desired positions or areas in these spectral images. The spectral reflectance calculation unit 68 also calculates the PRI by using Formula 10. The FPGA 66 may calculate the PRI for each pixel, based on the spectral images described above.

Note that instead of the multi-spectrum camera device 450, the control device 118 of the operating machine 100 or the server 704 that has obtained the spectral images and the information about spectral reflectance may calculate the PRI by using Formula 10. The PRI for each plant calculated in this way is accumulated in the database 706.

As obvious in Formula 10, the PRI takes a value between "-1" and "+1", but PRIs calculated in actual cases from the reflectances of leaves often have small absolute values around zero. In general, it is difficult for the server 704 to definitely determine whether a plant is in a state of water stress or not, just due to the PRI taking a certain value. This is because the reflectance is influenced by the kind of a plant, air temperature, and the like.

However, for a plant cultivated in a stable growing environment as in a plant factory, the multi-spectrum camera device 450 can measure reflected light of a cultivation target plant in advance in a state where water stress is controlled. Therefore, the server 704 can accumulate the PRI observed in a state where water stress is controlled for a certain period of time for any plants. For example, a relationship between the amount of water sprayed for a unit time and the PRI may be accumulated so as to obtain a relationship between water stress given to a certain plant and values of the PRI. Also, an administrator of plants can grasp how much water stress is effective for raising the plant, by inspection after the harvest and actual tasting.

In this way, by referring to knowledge data accumulated in advance, a preferable value of the PRI can be clarified. Therefore, if the PRI goes below a threshold (for example, "0"), the server 704 can control the water adjustment unit 6012 to start irrigation. Since the PRI changes its value in response to water stress within an extremely short time less than an hour, the server 704 may observe the PRI at several minute intervals, to execute appropriate irrigation. By building such a PRI observation-irrigation control system, the plant cultivation system 1 can execute appropriate irrigation for respective plants.

Note that the NDVI can be used as an index for control for a comparatively long period such as managing raising states and harvest time, whereas the PRI is an index with which a short cycle control is possible when water stress is given. By using both indices, the server 704 and the like can execute control for putting the quality and crop yields of plants into desired states over the entire raising period.

FIG. 33 is a flowchart of a process of obtaining data representing a relationship between water stress and the PRI by the plant cultivation system 1. In the following, it is assumed that the server 704 calculates the PRI.

First, the environment adjustment unit 600 of the plant cultivation facility 10 controls water stress in response to control by the server 704 and an operation by an administrator of plants (Step S1). Controlling the water stress is preferably executed for a wide range of states covering from a water-sufficient state, to an underhydration state allowable during the raising process of the produce.

Next, the multi-spectrum camera device 450 of the operating machine 100 obtains an image of leaves of the plant (Step S2). Imaging the leaves of the plant is done in parallel with giving water stress, and it is preferable to obtain multiple sheets of images so that the server 704 can observe influence of the water stress after the water stress was given and the influence has become stable temporally.

The multi-spectrum camera device 450 transmits the images obtained at Step S2 to the server 704 (Step S3). The multi-spectrum camera device 450 also transmits the degree of the water stress to the server 704, which may not be a binary value representing whether the water stress has been given or not if the degree of the given water stress has been controlled.

Next, the server 704 receives the images (Step S4), and the server 704 calculates the PRI by using Formula 10 (Step S5).

The server 704 has the database 706 accumulate data representing a relationship between the water stress and the PRI (Step S6). In this way, a relationship between the degree of water stress given to a plant and the PRI is accumulated in the database 706.

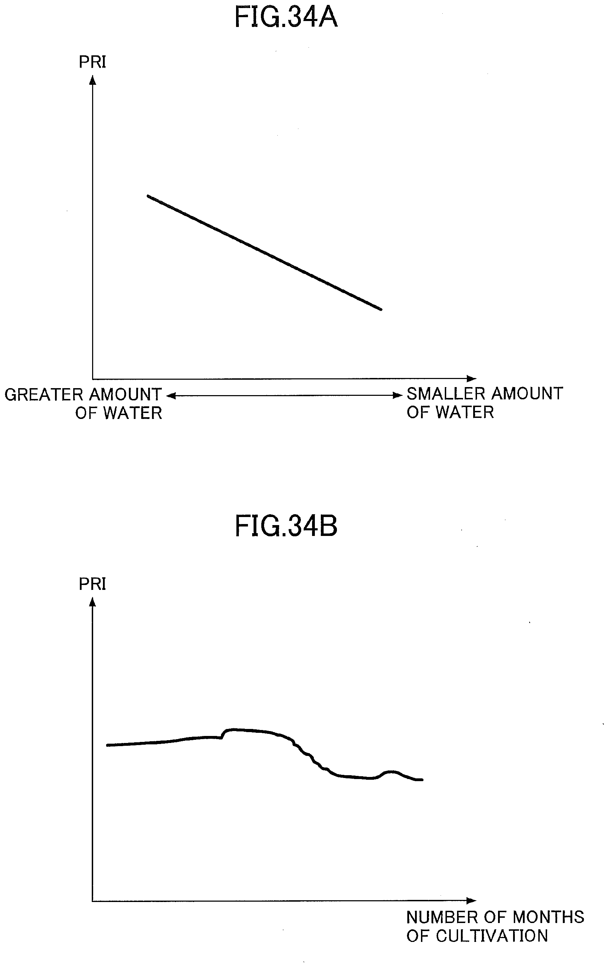

FIG. 34A is an example of a schematic view of a relationship between the degree of water stress and the PRI. In FIG. 34A, although the greater the water stress is (the smaller the amount of water is), the rightward lower the PRI is, this figure is just schematic; the PRI may be rightward higher, or may not change uniformly.

Knowledge about how much water stress is preferable for plants is obtained from employees in agriculture, inspection after the harvest, and actual tasting, with which a preferable PRI can be determined from FIG. 34A.

Incidentally, preferable water stress may change depending on raising stages of a plant. Therefore, considering the raising stages of a plant, it is preferable that the server 704 obtains a relationship between the degree of water stress and the PRI regularly (for example, every ten days or every month). By doing so, the preferable PRI can be accumulated over the entire period of the raising stages.

FIG. 34B is an example of a schematic view of a relationship between raising months and the preferable PRI. According to FIG. 34B, this plant is favorably given water stress having a higher PRI in the first half of the raising stages, and favorably given water stress having a lower PRI in the latter half of the raising stages. Such a way of giving water stress may be called "draining". For example, a technology has been known to raise sugar content of fruits by putting the plant into an intentional underhydration state by "draining" before harvesting the fruits. Having such values of the PRI registered in the database 706, to realize to desired underhydration states in predetermined raising stages, the server 704 can automatically execute the draining. Therefore, if knowledge as illustrated in FIG. 34B has been accumulated in the database 706, the server 704 can intentionally generate a preferable water stress state based on the PRI.

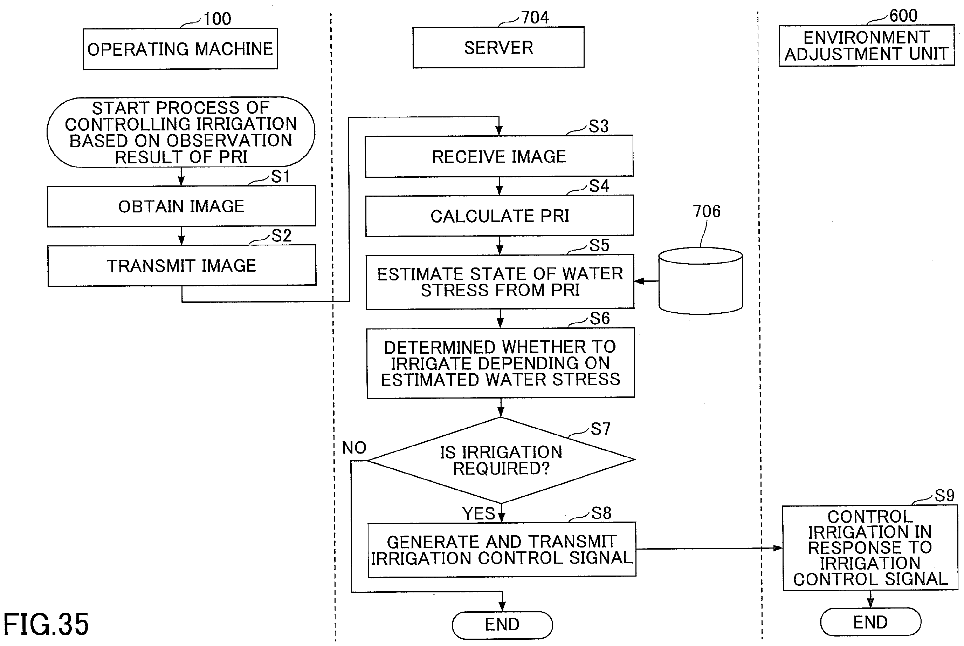

Next, by using FIG. 35, irrigation control will be described that uses data representing a relationship between water stress and the preferable PRI. FIG. 35 is a flowchart illustrating steps for irrigation control executed by the plant cultivation system 1. The process in FIG. 35 is repeatedly executed, for example, every several minutes.

The multi-spectrum camera device 450 of the operating machine captures an image of produce intermittently (Step S1). The imaging interval is preferably about one minute.

Next, the multi-spectrum camera device 450 transmits the obtained image to the server 704 (Step S 2) .

The server 704 receives the image (Step S3), and the server 704 analyzes the image to calculate the PRI (Step S4).

Next, the server 704 verifies the PRI with data in the database 706, to estimate the state of water stress (Step S5). The server 704 reads the PRI corresponding to the current raising months, for example, represented as in FIG. 34B, and compares the read PRI with the PRI calculated at Step S4.

Next, the server 704 determines whether to execute irrigation depending on the estimated state of the water stress (Step S6). Specifically, the server 704 executes controlling so as to make up the difference between the state of the water stress estimated at Step 5 and the desired state of water stress. In other words, if the estimated state of the water stress (PRI) is an underhydration state with respect to the desired state of water stress (PRI), the server 704 determines to execute irrigation, or if in an overhydration state, determines not to execute irrigation.

If having determined to execute irrigation (YES at Step S7), the server 704 generates an irrigation control signal, and transmits the signal to the environment adjustment unit 600 (Step S8).

The water adjustment unit 6012 of the environment adjustment unit 600 executes irrigation control in response to the irrigation control signal (Step S9).

As described above, monitoring the PRI makes it possible to execute appropriate irrigation. Note that the reflectances at the wavelengths 531 nm and 570 nm are not necessarily used for calculating the PRI, but the reflectance at an optimum wavelength for each plant may be used. Also, the state of water stress may be monitored based on the reflectance at an arbitrary wavelength, without calculating the PRI.

[Inventions based on embodiments]

The embodiments and the application examples described above at least include the following inventions having respective characteristics.

(1) An information processing apparatus, such as the server 704, processes information to generate a control signal for controlling a device, such as the operating machine 100 and the user terminals 710 and 712. The information processing apparatus includes an obtainment unit configured to obtain first subject state information, such as the NDVI value, that represents a state of a specific subject, such as a plant, generated from image information of the subject, such as spectral image information, captured by an imaging unit, such as the multi-spectrum camera device 450; and a generation unit configured to generate the control signal based on the obtained first subject state information.

(2) The information processing apparatus according to (1), wherein the obtainment unit obtains the first subject state information representing the state of the subject, generated from the spectral image information of the subject.

(3) The information processing apparatus according to (1), wherein the obtainment unit obtains the first subject state information about the state of the subject representing the plant occupied ratio by noxious insects or the like generated from polarized image information of the subject.

(4) The information processing apparatus according to (2), wherein the obtainment unit obtains the NDVI value of the subject.

(5) The information processing apparatus according to any one of (1) to (4), wherein the obtainment unit obtains, in addition to the first subject state information, second subject state information representing the state of the subject, such as a plant size value, generated from at least one of the spectral image information, distance image information, and the polarized image information, and generates the control signal based on the obtained first and second subject state information.

(6) The information processing apparatus according to any one of (1) to (5), the generation unit generates estimated information, such as the predicted harvest date, based on the first subject state information, and generates the control signal based on the generated estimated information and input information input by a user, such as a desired harvest date and a desired delivery date.

(7) The information processing apparatus according to any one of (1) to (6), the generation unit obtains, based on the first subject state information, a control condition for accelerating or decelerating the growth of the plant for having a current state of the subject transition to a desired state, such as a harvest-required state, in a predetermined period of time, such as the harvest time, and based on the control condition, generates the control signal.

(8) The information processing apparatus according to any one of (1) to (7), the generation unit generates amount information about an amount of control by the control signal, such as a count value, and based on the amount information, generates the control signal or a non-control signal representing that control by the control signal is not to be executed.

(9) The information processing apparatus according to any one of (1) to (8), wherein the obtainment unit obtains predicted information, such as weather forecast, for predicting behavior of a predetermined target, from an external information source, wherein the generation unit does not generate a control signal based on the predicted information in a case where control by the control signal, such as controlling LED illumination by the control signal for a process of adjusting harvest time, is to be executed, and generates a control signal based on the predicted information in a case where the control by the control signal is not to be executed.

(10) A device, such as the operating machine 100, controlled by the control signal from the information processing apparatus, such as the server 704, according to any one of claims 1 to 10, includes an obtainment unit configured to obtain distance information about a distance from the device to an object, in response to the control signal; and an operational unit configured to execute predetermined work on the object based on the obtained distance information.

(11) An information processing system, such as the plant cultivation system 1, that processes information to generate a control signal for controlling a device, such as the operating machine 100 and the user terminals 710 and 712, includes an imaging unit, such as a multi-spectrum camera device, configured to obtain spectral image information by capturing an image of a specific subject such as a plant; a calculation unit configured to calculate subject state information representing the state of the subject, such as the NDVI value, generated based on the spectral image information of the subject; and a generation unit configured to generate the control signal, based on the calculated subject state information.

(12) A method of producing a control signal to control a device, such as the operating machine 100 and the user terminals 710 and 712, by processing information, the method including obtaining subject state information, such as the NDVI value, representing the state of a specific subject, such as a plant, generated from spectral image information of the subject captured by an imaging unit, such as the multi-spectrum camera device 450; and producing the control signal based on the obtained subject state information.

(13) A program for causing a computer, such as the server 704, to execute a method for processing information to generate a control signal for controlling a device, such as the operating machine 100 and the user terminals 710 and 712, the method including obtaining subject state information, such as the NDVI value, representing the state of a specific subject, such as a plant, generated from spectral image information of the subject captured by an imaging unit, such as the multi-spectrum camera device 450; and generating a control signal based on the obtained subject state information.

Note that this international patent application is based upon and claims the benefit of priority of Japanese patent application No. 2014-146161 filed on July 16, 2014, and Japanese patent application No. 2015-005745 filed on January 15, 2015, the entire contents of which are hereby incorporated by reference.

So far, agricultural machines and systems for farming fields have been described with embodiments and application examples. Note that the present invention is not limited to the embodiments and the application examples, but various modifications and improvements can be made within the scope of the present invention.

**Claims**

1. An information processing apparatus that processes information to generate a control signal for controlling a device, the information processing apparatus comprising:

   an obtainment unit configured to obtain first subject state information that represents a state of a subject generated from image information of the subject captured by an imaging unit; and
   a generation unit configured to generate the control signal based on the obtained first subject state information.

2. The information processing apparatus according to claim 1, wherein the obtainment unit obtains the first subject state information representing the state of the subject, generated from spectral image information of the subject.

3. The information processing apparatus according to claim 1, wherein the obtainment unit obtains the first subject state information representing the state of the subject, generated from polarized image information of the subject.

4. The information processing apparatus according to claim 2, wherein the obtainment unit obtains an NDVI value of the subject.

**5.** The information processing apparatus according to claim 2, wherein the obtainment unit obtains a PRI (Photochemical/Physiological Reflectance Index) of the subject.

**6.** The information processing apparatus according to any one of claims 1 to 5, wherein the obtainment unit obtains, in addition to the first subject state information, second subject state information representing the state of the subject, generated from at least one of spectral image information, distance image information, and polarized image information, and generates the control signal based on the obtained first and second subject state information.

**7.** The information processing apparatus according to any one of claims 1 to 6, the generation unit generates estimated information based on the first subject state information, and generates the control signal based on the generated estimated information and input information input by a user.

**8.** The information processing apparatus according to any one of claims 1 to 7, the generation unit obtains, based on the first subject state information, a control condition for having a current state of the subject transition to a desired state in a predetermined period of time, and generates the control signal based on the control condition,.

**9.** The information processing apparatus according to any one of claims 1 to 8, the generation unit generates amount information about an amount of control by the control signal, and based on the amount information, generates the control signal or a non-control signal representing that control by the control signal is not to be executed.

**10.** The information processing apparatus according to any one of claims 1 to 9, wherein the obtainment unit obtains predicted information for predicting behavior of a predetermined target, from an external source,
wherein in a case where control by the control signal is to be executed, the generation unit does not generate a control signal based on the predicted information, and in a case where control by the control signal is not to be executed, generates a control signal based on the predicted information.

**11.** A device controlled by the control signal from the information processing apparatus according to any one of claims 1 to 10, comprising:

another obtainment unit configured to obtain distance information about a distance from the device to an object, in response to the control signal; and
an operational unit configured to execute predetermined work on the object, based on the obtained distance information.

**12.** An information processing system that processes information to generate a control signal for controlling a device, the information processing system comprising:

an imaging unit configured to obtain image information by capturing an image of a subject;
a calculation unit configured to calculate subject state information that represents a state of a subject generated from the image information of the subject; and
a generation unit configured to generate the control signal based on the calculated subject state information.

**13.** A method of producing a control signal to control a device by processing information, the method comprising:

obtaining subject state information that represents a state of a subject generated from image information of the subject captured by an imaging unit; and
producing the control signal based on the obtained subject state information.

**14.** A program for causing a computer to execute a method for processing information to generate a control signal for controlling a device, the method comprising:

obtaining subject state information that represents a state of a subject generated from image information of the subject captured by an imaging unit; and
producing the control signal based on the obtained subject state information.

EP 3 171 327 A1

FIG.1

# FIG.2

1502

7042 7041

706 708

RAM CPU

704

7043 SSD ROM 7044

I/F

7045

702

700

701

710

712

FIG.3

EP 3 171 327 A1

# FIG.4

410

2

10a

10b

# FIG.5

# FIG.6

31

# FIG.7

# FIG.8A

# FIG.8B

# FIG.8C

# FIG.9A

p(x,y)

# FIG.9B

q(x+d,y)

d

# FIG.10

# FIG.11

# FIG.12

# FIG.13

# FIG.14

# FIG.15A

# FIG.15B

ONE PIXEL

42

44

# FIG.16

450

60

70

# FIG.17A

<u>450</u>

# FIG.17B

<u>450</u>

FIG.18

76

78A

## FIG.19

77

EP 3 171 327 A1

# FIG.20

77

# FIG.21

SPECTRAL
REFLECTANCE

WAVELENGTH

## FIG.22A

76

78B

78Ba   78Bb   78Bc

## FIG.22B

76

78C

78Ca   78Cb

# FIG.23

EP 3 171 327 A1

# FIG.24

500

| 5002 | | 5010 |
|---|---|---|
| TEMPERATURE SENSOR | | $CO_2$ CONCENTRATION SENSOR |
| 5004 | | 5012 |
| HUMIDITY SENSOR | | WATER SENSOR |
| 5006 | | 5014 |
| ILLUMINANCE SENSOR | | NUTRITION SENSOR |
| 5008 | | 5018 |
| WINDSPEED SENSOR | | WIRELESS COMMUNICATION UNIT |

5016

# FIG.25

600

| 6002 | | 6010 |
|---|---|---|
| TEMPERATURE ADJUSTMENT UNIT | | $CO_2$ CONCENTRATION ADJUSTMENT UNIT |
| 6004 | | 6012 |
| HUMIDITY ADJUSTMENT UNIT | | WATER ADJUSTMENT UNIT |
| 6006 | | 6014 |
| ILLUMINANCE ADJUSTMENT UNIT | | NUTRITION ADJUSTMENT UNIT |
| 6008 | | 6018 |
| WINDSPEED ADJUSTMENT UNIT | | WIRELESS COMMUNICATION UNIT |

6016

FIG.26

EP 3 171 327 A1

EP 3 171 327 A1

OPERATING MACHINE ~100

SERVER ~704

DATABASE ~706

START PROCESS OF
PREDICTING HARVEST TIME

↓ S100B

OBTAIN IMAGE, ETC.

↓ S101B

OBTAIN IMAGE, ETC.

↓ S102B

RECOGNIZE PLANT

↓ S103B

RECOGNIZE PLANT

↓ S104B

OBTAIN NDVI VALUE

↓ S105B

OBTAIN PLANT SIZE VALUE

↓ S106B

TRANSMIT PLANT
MANAGEMENT ID AND NDVI
VALUE

S108B

OBTAIN PLANT MANAGEMENT
ID AND NDVI VALUE
OBTAIN NDVI FUNCTION

↓ S110B

IDENTIFY CURRENT DATE dn

↓ S112B

IDENTIFY PREDICTED
HARVEST DATE dp

↓ S114B

GENERATE CONTROL SIGNAL

↓

END

FIG.27

# FIG.28

```
┌─────────────────────────┐          ┌─────────────────────────┐
│      ENVIRONMENT        │~600      │        SERVER           │~704
│    ADJUSTMENT UNIT      │          │                         │
└─────────────────────────┘          └─────────────────────────┘
```

S112

START PROCESS OF
ADJUSTING HARVEST TIME

S200

RECEIVE DESIRED
DATE OF HARVEST

S202

IS
PREDICTED DATE
EARLIER THAN DESIRED
DATE?          NO

YES          S204

S206

CONTROL
BLOCKING GROWTH          ◄────          GENERATE AND TRANSMIT
BLOCKING SIGNAL

S210          S208

CONTROL
ACCELERATING GROWTH          ◄────          GENERATE AND TRANSMIT
ACCELERATION SIGNAL

END

| OPERATING MACHINE ∽100 | SERVER ∽704 | DATABASE ∽706 |

```
START PROCESS OF
EXTERMINATING NOXIOUS
INSECTS

            │  ⁓S300
            ▼
OBTAIN IMAGE, ETC.

            │  ⁓S302
            ▼
RECOGNIZE PLANT

            │  ⁓S304
            ▼
OBTAIN RATIO P

            │  ⁓S306
            ▼
TRANSMIT PLANT
MANAGEMENT ID AND RATIO P
```

S308
IS P GREATER THAN PREDETERMINED VALUE Po?
NO
YES

S310
TRANSMIT EXTERMINATION SIGNAL TRANSMIT ID AND COUNT VALUE

S312
IS IT GREATER THAN PREDETERMINED COUNT?
NO
YES

S314
PROCESS OF EXTERMINATING NOXIOUS INSECTS

S318
TRANSMIT NON-EXTERMINATION SIGNAL

S316
MOVE TO NEXT TARGET

END

FIG.29

# FIG.30

| ENVIRONMENT ADJUSTMENT UNIT ~600 | SERVER ~704 |

START PROCESS OF
SUPPLEMENTARY
ILLUMINATION

↓

~S400
OBTAIN WEATHER FORECAST
INFORMATION

↓

~S402
IS
ADJUSTMENT
REQUIRED FOR
CONTROLLING?

YES

NO

↓

~S404
IS
ILLUMINATION
REQUIRED?

NO

YES

↓

~S406
TRANSMIT
ILLUMINATION SIGNAL

S408~
ILLUMINATION BY LED

↓

END

EP 3 171 327 A1

# FIG.31

| ENVIRONMENT ADJUSTMENT UNIT ～600 | SERVER ～704 |

**ENVIRONMENT ADJUSTMENT UNIT** ～600

( START PROCESS OF HARVEST )

S500 — OBTAIN IMAGE, ETC.

S502 — RECOGNIZE PLANT

S504 — OBTAIN NDVI VALUE

S506 — TRANSMIT PLANT MANAGEMENT ID AND NDVI VALUE

**SERVER** ～704

S508 — OBTAIN NDVI VALUE

S510 — IS HARVEST REQUIRED?  NO

YES  S512 — TRANSMIT HARVEST SIGNAL

S514 — OBTAIN IMAGE, ETC.

S516 — RECOGNIZE PLANT

S518 — OBTAIN DISTANCE INFORMATION

S520 — HARVEST OPERATION

S522 — MOVE TO NEXT TARGET

S524 — TRANSMIT NON-HARVEST SIGNAL

( END )

55

# FIG.32

# FIG.33

# FIG.34A

PRI

GREATER AMOUNT
OF WATER ←——————————→ SMALLER AMOUNT
OF WATER

# FIG.34B

PRI

NUMBER OF MONTHS
OF CULTIVATION

EP 3 171 327 A1

**FIG.35**

| 100 | | 704 | | 600 |
|---|---|---|---|---|
| OPERATING MACHINE | | SERVER | | ENVIRONMENT ADJUSTMENT UNIT |

**OPERATING MACHINE (100)**

START PROCESS OF CONTROLLING IRRIGATION BASED ON OBSERVATION RESULT OF PRI

↓

S1 — OBTAIN IMAGE

↓

S2 — TRANSMIT IMAGE

**SERVER (704)**

S3 — RECEIVE IMAGE

↓

S4 — CALCULATE PRI

↓

S5 — ESTIMATE STATE OF WATER STRESS FROM PRI ← 706

↓

S6 — DETERMINED WHETHER TO IRRIGATE DEPENDING ON ESTIMATED WATER STRESS

↓

S7 — IS IRRIGATION REQUIRED?

NO →

YES ↓

S8 — GENERATE AND TRANSMIT IRRIGATION CONTROL SIGNAL

END

**ENVIRONMENT ADJUSTMENT UNIT (600)**

S9 — CONTROL IRRIGATION IN RESPONSE TO IRRIGATION CONTROL SIGNAL

↓

END

# EP 3 171 327 A1

## INTERNATIONAL SEARCH REPORT

| International application No. |
|---|
| PCT/JP2015/066773 |

**A. CLASSIFICATION OF SUBJECT MATTER**
*G06Q50/02(2012.01)i*

According to International Patent Classification (IPC) or to both national classification and IPC

**B. FIELDS SEARCHED**

Minimum documentation searched (classification system followed by classification symbols)
G06Q50/02

Documentation searched other than minimum documentation to the extent that such documents are included in the fields searched
Jitsuyo Shinan Koho          1922–1996   Jitsuyo Shinan Toroku Koho   1996–2015
Kokai Jitsuyo Shinan Koho    1971–2015   Toroku Jitsuyo Shinan Koho   1994–2015

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2014-103958 A  (Daiwa House Industry Co., Ltd.),<br>09 June 2014 (09.06.2014),<br>paragraphs [0062] to [0067]<br>(Family: none) | 1,9,12-14<br>2-8,11<br>10 |
| Y | JP 2013-231645 A  (Ito En, Ltd.),<br>14 November 2013 (14.11.2013),<br>paragraphs [0014], [0026], [0066]<br>(Family: none) | 2,4-6 |
| Y | JP 2004-177369 A  (Genesia Corp.),<br>24 June 2004 (24.06.2004),<br>paragraph [0007]<br>(Family: none) | 3,6 |

| ☒ Further documents are listed in the continuation of Box C. | ☐ See patent family annex. |
|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>07 July 2015 (07.07.15) | Date of mailing of the international search report<br>21 July 2015 (21.07.15) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (July 2009)

**INTERNATIONAL SEARCH REPORT**

International application No.

PCT/JP2015/066773

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2005-291910 A  (Japan Aerospace Exploration Agency), 20 October 2005 (20.10.2005), paragraph [0001] (Family: none) | 6 |
| Y | JP 2006-333744 A  (Matsushita Electric Works, Ltd.), 14 December 2006 (14.12.2006), paragraphs [0058], [0095] to [0098] (Family: none) | 7,8 |
| Y | JP 8-112021 A  (Iseki & Co., Ltd.), 07 May 1996 (07.05.1996), paragraph [0001] (Family: none) | 11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5017505 A
- JP 2013005725 A
- JP 2014146161 A
- JP 2015005745 A